# NEUE EUROPÄISCHE PATENTSCHRIFT

(11) **EP 3 353 610 B2**
(45) Veröffentlichungstag und Bekanntmachung des Hinweises auf die Entscheidung über den Einspruch: **06.07.2022**
(45) Hinweis auf die Patenterteilung: 20.03.2019
(21) Anmeldenummer: 17718552.7
(22) Anmeldetag: 24.04.2017
(51) Int. Cl.: G05B 19/042, G05B 19/418

(54) **VERBINDUNGSEINHEIT, ÜBERWACHUNGSSYSTEM UND VERFAHREN ZUM BETREIBEN EINES AUTOMATISIERUNGSSYSTEMS**
CONNECTION UNIT, MONITORING SYSTEM AND METHOD FOR OPERATING AN AUTOMATION SYSTEM
UNITÉ DE LIAISON, SYSTÈME DE SURVEILLANCE ET PROCÉDÉ PERMETTANT DE FAIRE FONCTIONNER UN SYSTÈME D'AUTOMATISATION

(30) Priorität: 22.04.2016 DE 102016107491
(43) Veröffentlichungstag der Anmeldung: 01.08.2018
(73) Patentinhaber: Beckhoff Automation GmbH, 33415 Verl (DE)
(72) Erfinder: DRESSELHAUS, Pascal, 33415 Verl (DE); GOLDSTEIN, Sven, 32257 Buende (DE); BECKHOFF, Hans, 33415 Verl (DE); VIENKEN, Ralf, 33334 Gütersloh (DE)
(74) Vertreter: Patentanwaltskanzlei WILHELM & BECK
(86) Internationale Anmeldenummer: PCT/EP2017/059655
(87) Internationale Veröffentlichungsnummer: WO 2017/182671

(56) Entgegenhaltungen:
- WO-A1-2004/010645
- DE-A1- 10 252 278
- DE-A1- 19 928 517
- DE-A1-102005 051 580
- DE-A1-102008 019 053
- DE-U1-202015 104 682
- US-A1- 2005 066 104
- Betriebsanleitung 'Flexi Soft Gateways' der Firma SICK AG -19 November 2013

## Beschreibung

Die vorliegende Erfindung betrifft eine Verbindungseinheit für ein Automatisierungssystem, ein Überwachungssystem mit einer Verbindungseinheit für ein Automatisierungssystem und ein Verfahren zum Betreiben eines Automatisierungssystems.

Diese Anmeldung beansprucht die Priorität der deutschen Patentanmeldung DE102016107491.8 mit dem Titel "Verbindungseinheit, Überwachungssystem und Verfahren zum Betreiben eines Automatisierungssystems", eingereicht am 22.04.2016. Der Offenbarungsgehalt der Prioritätsanmeldung DE102016107491.8 wird durch Rückbezug ausdrücklich auch zum Inhalt der vorliegenden Anmeldung gemacht.

Allgemein befasst sich die Erfindung mit der Anbindung eines Automatisierungssystems an eine externe Dateninfrastruktur. Die Erfindung kann insbesondere in Automatisierungssystemen für die Industrieautomation, für die Gebäude- und Klimaautomatisierung, für die Bühnentechnik, für die Energietechnik oder für die Verkehrsleittechnik eingesetzt werden. Im Rahmen der Industrieautomation kann das Automatisierungssystem beispielsweise Pressen, Verpackungsmaschinen oder Anlagen zur Ausführung chemischer Verfahren steuern, im Rahmen der Gebäudeautomatisierung beispielsweise Heizungs- und Lüftungssysteme, Sonnenschutzsysteme oder Zugangssysteme eines Gebäudes. Automatisierungssystem können in der Energietechnik unter anderem in Windkraftanlagen, Photovoltaiksystemen, Biomassekraftwerken oder in Energieerfassungssystemen eingesetzt werden. Die hier genannten Beispiele sind nicht als abschließende Aufzählung anzusehen und beschränken nicht den Schutzbereich der vorliegenden Erfindung.

Automatisierungssysteme dienen der Steuerung von Automatisierungsprozessen. Ein Automatisierungsprozess umfasst in der Regel ein Einlesen von Eingangsdaten, die den Zustand des Automatisierungsprozesses charakterisieren und auf durch Sensoren erfassten Messwerten basieren. Die Sensoren können beispielsweise als Schalter, Temperatursensoren, Drucksensoren oder Lichtschranken ausgebildet sein. Die Eingangsdaten können durch die Sensoren gemessene Temperaturwerte, Druckwert oder Schaltzustände umfassen. Auf Grundlage der Eingangsdaten werden, in der Regel durch eine Steuereinheit des Automatisierungssystems, Ausgangsdaten erstellt, die der Steuerung des Automatisierungsprozesses dienen. Die Ausgangsdaten repräsentieren in der Regel Steuerwerte für Aktoren des Automatisierungssystems. Die Aktoren können beispielweise als Relais, Motoren oder Ventile ausgebildet sein. Die Steuerwerte können einen Motorenstrom, eine Motordrehzahl, eine Schaltspannung oder ein Schaltstrom umfassen.

Die Messwerte werden in der Regel durch Signaleinheiten von den Sensoren in Form von Eingangssignalen eingelesen und in den Signaleinheiten in Eingangsdaten umgewandelt. Analog wandeln die Signaleinheiten die Ausgangsdaten in Steuerwerte um und geben die Steuerwerte als Ausgangssignale an die Aktoren aus. Die Eingangs- und Ausgangssignale können auch allgemein als Feldsignale bezeichnet werden. Bei den Feldsignalen kann es sich beispielsweise um Spannungssignale, Stromsignale, digitale Datensignale oder geregelte Ströme bzw. Spannungen handeln.

Die Signaleinheiten weisen Feldanschlüsse für den Anschluss der Sensoren und Aktoren, sowie wie für die Ein- oder Ausgabe der Feldsignale auf. Sie sind in der Regel über eine Datenleitung, etwa über einen Feldbus, mit der Steuereinheit des Automatisierungssystems verbunden. Über die Datenleitung werden die eingelesenen Messwerte als Eingangsdaten von den Signaleinheiten an die Steuereinheit zur weiteren Verarbeitung übertragen und die von der Steuereinheit bereitgestellten Steuerwerte als Ausgangsdaten an die Signaleinheiten überspielt. In solch einem Fall sind die Signaleinheiten dazu ausgebildet, eine Konvertierung zwischen den auf der Datenleitung umlaufenden Ein- und Ausgangsdaten und den Feldsignalen auszuführen.

Automatisierungssysteme können in eine Feldebene und eine Steuerebene unterteilt werden. Die Feldebene umfasst alle Komponenten des Automatisierungssystems, welche in der Regel prozessnah, also an oder in der Nähe einer gesteuerten Anlage, Maschine oder sonstigen technischen Einrichtung angeordnet sind und der Weiterleitung bzw. Konversion der Ein- und Ausgangsdaten, sowie der Feldsignale dienen. Unter anderem umfasst die Feldebene die Signaleinheiten und die an die Signaleinheiten angeschlossenen Sensoren und Aktoren. Die Steuerungsebene umfasst die Steuereinheit und alle weiteren Kontrollgeräte, welche die in der Feldebene erfassten Steuerdaten empfangen und zu Ausgangssteuerdaten für die Ausgabe in die Feldebene verarbeiten. Feldebene und Steuerebene sind in der Regel durch eine oder mehrere Datenleitungen miteinander verbunden.

Die Steuereinheit des Automatisierungssystems kann die Ein- und Ausgangsdaten nicht nur zum Zwecke der Steuerung des Automatisierungsprozesses verarbeiten, sondern auch aus dem Automatisierungssystem an eine externe Dateninfrastruktur weitergeleiten. Bei der externen Dateninfrastruktur kann es sich um ein Rechnersystem handeln, welches als sogenannte "Cloud" datenbezogene Dienste anbietet. Die datenbezogenen Dienste können eine Speicherung der Daten zur späteren Verwendung oder eine Auswertung bzw. Analyse der Daten umfassen. Auf diese Weise können etwa ein Energieverbrauch, eine Temperatur oder andere physikalische Parameter des Automatisierungssystems erfasst werden.

Gegenüber einer Speicherung und Analyse der Ein- und Ausgangsdaten in der Steuereinheit bietet eine Weiterleitung an eine externe Dateninfrastruktur den Vorteil, dass zur Speicherung und Analyse der Daten keine Hardwareressourcen der Steuereinheit verwendet werden müssen und die Daten oder die Ergebnisse der Analyse an andere, ebenfalls an die externe Dateninfrastruktur angeschlossene Einheiten weitergeleitet werden können. Außerdem können in der externen Dateninfrastruktur die Daten von mehreren, verteilt angeordneten Steuereinheiten eines oder mehrerer Automatisierungssysteme zusammengeführt und verknüpft werden.

Die Rechnersysteme der externen Dateninfrastruktur können mit dem Automatisierungssystem entweder über ein lokales und/oder privates Datennetzwerk oder auch über ein weltweites und/oder grundsätzlich öffentliches Datennetzwerk, etwa das Internet, verbunden sein. Über das Internet zugängliche externe Dateninfrastrukturen werden als Cloud-Dienste unter anderem von verschiedenen Internetkonzernen angeboten.

Bei der Anbindung der Steuereinheit des Automatisierungssystems an das externe Datennetzwerk müssen für die Weiterleitung der Ein- und Ausgangsdaten Rechenkapazitäten der Steuereinheit aufgewendet werden, welche dann nicht mehr für die eigentliche Steuerung des Automatisierungsprozesses zur Verfügung stehen.

Druckschrift US 2005/0066104 A1 beschreibt ein Verbindungsmodul, welches zwischen ein auf einem Feldbus basierenden Automatisierungsnetzwerk und ein weiteres Datennetzwerk geschaltet ist. Das Verbindungsmodul übermittelt auf Anfrage durch Netzwerkteilnehmer des weiteren Datennetzwerk Prozessdaten aus dem Automatisierungsnetzwerk an den betreffenden Netzwerkteilnehmer.

Druckschrift DE 199 28 517 A1 beschreibt ein Steuerungssystem zum Steuern sicherheitskritischer Prozesse mit einer sicheren Steuereinheit, die getrennt von einem Busmaster an einen Feldbus angeschlossen ist.

Druckschrift DE 102 52 278 A1 beschreibt einen systemintegrierten Busmonitor, der Daten, die auf einem Feldbus übertragen werden, mitliest.

Druckschrift WO 2004/010645 beschreibt ein Gateway, welches an einen Feldbus angeschlossen ist und um eine Busmonitorfunktion erweitert ist.

Aufgabe der vorliegenden Erfindung ist es, eine verbesserte Anbindung eines Automatisierungssystems an eine externe Dateninfrastruktur zu ermöglichen.

Diese Aufgaben werden durch eine Verbindungseinheit, ein Überwachungssystem und ein Verfahren zum Betreiben eines Automatisierungssystems gemäß den unabhängigen Ansprüchen gelöst. Weitere vorteilhafte Ausführungen sind jeweils in den abhängigen Ansprüchen angegeben.

Eine Verbindungseinheit zur Übertragung von Prozessdaten eines Automatisierungsprozesses eines Automatisierungssystems zu einer externen Dateninfrastruktur ist als Feldgerät zur Anordnung in einer Feldebene des Automatisierungssystems ausgebildet. Die Verbindungseinheit umfasst ein Feldbusmodul, ein Netzwerkmodul und ein Schnittstellenmodul. Das Feldbusmodul ist an einen Feldbus anschließbar und dazu ausgebildet, die Prozessdaten über den Feldbus mit einer Signaleinheit, die mit dem Automatisierungsprozess über einen Feldanschluss in Verbindung steht, auszutauschen. Das Netzwerkmodul ist an ein externes Datennetzwerk anschließbar und dazu ausgebildet, die Prozessdaten über das externe Datennetzwerk mit der externen Dateninfrastruktur auszutauschen. Das Schnittstellenmodul ist mit dem Netzwerkmodul und dem Feldbusmodul für einen Austausch der Prozessdaten zwischen dem Feldbusmodul und dem Netzwerkmodul verbunden und dazu ausgebildet, den Austausch der Prozessdaten zwischen dem Netzwerkmodul und der externen Dateninfrastruktur eigenständig zu veranlassen.

Indem die Verbindungseinheit den Austausch der Prozessdaten mit der externen Dateninfrastruktur eigenständig veranlasst, kann der Austausch der Prozessdaten insbesondere unabhängig von der Steuerung des Automatisierungsprozesses erfolgen.

Auch kann der Austausch der Prozessdaten unabhängig von einer Steuereinheit des Automatisierungssystems und auch unabhängig von allen anderen Steuereinheiten in dem Automatisierungssystem erfolgen. Damit werden für die Übertragung der Prozessdaten zu der externen Dateninfrastruktur vorteilhafterweise keine Ressourcen zur Steuerung des Automatisierungsprozesses, insbesondere keine Rechenkapazitäten der Steuereinheit verwendet.

Da die Verbindungseinheit als Feldgerät ausgebildet ist, leitet die Verbindungseinheit die Prozessdaten lediglich weiter, ohne sie zur Steuerung des Automatisierungsprozesses logisch zu verknüpfen. Damit können ein die Verbindungseinheit und die Signaleinheit umfassendes Überwachungssystem und die Steuerung des Automatisierungsprozesses vorteilhafterweise funktional unabhängig voneinander ausgebildet werden. Dies vermeidet einen potentiell sicherheitskritischen Ausfall der Steuerung des Automatisierungsprozesses bei Störungen in der Verbindungseinheit oder der externen Dateninfrastruktur.

Indem die Verbindungseinheit eigenständig den Austausch der Prozessdaten über das externe Datennetzwerk veranlasst, kann die Verbindungseinheit die Prozessdaten vorteilhafterweise ausschließlich über von der Verbindungseinheit ausgehende Datenverbindungen mit der externen Dateninfrastruktur austauschen. Dies erleichtert eine Absicherung des Automatisierungssystems mittels einer Firewall zwischen der Verbindungseinheit und dem externen Datennetzwerk.

Bei einer Weiterbildung der Verbindungseinheit ist das Schnittstellenmodul dazu ausgebildet, den Austausch der Prozessdaten periodisch und/oder bei Eintritt eines in der Verbindungseinheit hinterlegten Ereignisses zu veranlassen. Bei einer Weiterbildung der Verbindungseinheit ist das Feldbusmodul dazu ausgebildet, die Prozessdaten über den Feldbus periodisch mit der Signaleinheit auszutauschen. Dies erlaubt es, den Austausch der Prozessdaten über den Feldbus und den Austausch der Prozessdaten über die externe Dateninfrastruktur zeitlich zu entkoppeln. Insbesondere können der Umfang der über das externe Datennetzwerk übertragenen Prozessdaten an die Bandbreite des Zugangs der Verbindungseinheit zu dem externen Datennetzwerks angepasst werden und beispielsweise gegenüber dem Umfang der über den Feldbus ausgetauschten Prozessdaten reduziert werden.

Bei einer Weiterbildung der Verbindungseinheit umfasst das Feldbusmodul ein Konfigurationsmodul, welches dazu ausgebildet ist, eine Abfrage der an den Feldbus angeschlossenen Signaleinheit zu veranlassen und die Signaleinheit betreffende Konfigurationsdaten zur Verfügung zu stellen. Dies erlaubt vorteilhafterweise eine automatisierte Abfrage und Bereitstellung der Konfigurationsdaten durch die Verbindungseinheit.

Eine Weiterbildung der Verbindungseinheit weist ein Servermodul auf, welches mit dem Netzwerkmodul verbunden und dazu ausgebildet ist, einem Zugriffsmodul eines mit dem Netzwerkmodul über das externe Datennetzwerk verbundenen externen Rechners Konfigurationsdaten der Verbindungseinheit zur Verfügung zu stellen. Die Verbindungseinheit ist dazu ausgebildet, das Feldbusmodul und/oder den Feldbus und/oder die Signaleinheit und/oder das Schnittstellenmodul auf Grundlage der Konfigurationsdaten zu konfigurieren. Dies ermöglicht es, die Konfiguration der Verbindungseinheit und der Signaleinheit auf einfache Weise über das externe Datennetzwerk zu ermitteln und zu verändern.

Bei einer Weiterbildung der Verbindungseinheit ist das Feldbusmodul dazu ausgebildet, die Prozessdaten in einem Feldbusdatenformat über den Feldbus auszutauschen, und das Netzwerkmodul ist dazu ausgebildet, die Prozessdaten in einem Netzwerkdatenformat über das externe Datennetzwerk zu übertragen. Die Verbindungseinheit weist ein Konvertierungsmodul auf, welches dazu ausgebildet ist, die Prozessdaten zwischen dem Feldbusdatenformat und dem Netzwerkdatenformat zu konvertieren. Dadurch können für die Übertragung der Prozessdaten über den Feldbus und das externe Datennetzwerk vorteilhafterweise jeweils unterschiedliche Datenformate verwendet werden. Insbesondere können die Prozessdaten über den Feldbus in einem binären Datenformat und über das externe Datennetzwerk in einem Klartext-Datenformat übertragen werden.

Eine Weiterbildung der Verbindungseinheit weist ein Speichermodul auf, welches dazu ausgebildet ist, die Prozessdaten nach einem Empfang über den Feldbus und vor einem Versenden über das externe Datennetzwerk zwischenzuspeichern. Hierdurch können vorteilhafterweise die Prozessdaten bei einem Abbruch der Datenverbindung zwischen der Verbindungseinheit und der externen Dateninfrastruktur in der Verbindungseinheit zwischengespeichert werden und nach einer Wiederherstellung der Datenverbindung gesammelt an die externe Dateninfrastruktur gesendet werden.

Die Verbindungseinheit umfasst das Schnittstellenmodul ein Sendemodul, wobei das Sendemodul dazu ausgebildet ist, den Austausch der Prozessdaten durch ein Öffnen eines Sendekanals über das Netzwerkmodul zu veranlassen, um eine die Prozessdaten umfassende Netzwerknachricht zu senden.

Die Verbindungseinheit umfasst das Schnittstellenmodul ein Empfangsmodul, wobei das Empfangsmodul dazu ausgebildet ist, den Austausch der Prozessdaten durch ein Öffnen eines Empfangskanals über das Netzwerkmodul zu veranlassen, um eine die Prozessdaten umfassende Netzwerknachricht abzurufen.

Indem die Verbindungseinheit den Austausch der Prozessdaten mittels des Öffnens des Sendekanals bzw. des Empfangskanals veranlasst, wird auf vorteilhaft einfache Art und Weise ein eigenständiger Austausch der Prozessdaten zwischen der Verbindungseinheit und der externen Dateninfrastruktur realisiert. Ein Austausch der Prozessdaten über Netzwerknachrichten ermöglicht einen plattformunabhängigen und zeitlich entkoppelten Austausch der Prozessdaten zwischen der Verbindungseinheit und der externen Dateninfrastruktur, beispielsweise unter Verwendung eines Nachrichtenverteilmoduls in dem externen Datennetzwerk.

Die Verbindungseinheit weist ein Echtzeitsystem und ein Anwendungssystem auf, wobei das Echtzeitsystem das Schnittstellenmodul und das Feldbusmodul und das Anwendungssystem das Netzwerkmodul umfasst. Das Echtzeitsystem stellt eine Echtzeitumgebung bereit, welche die deterministische Ausführung zeitkritischer Prozesse ermöglicht. Das Anwendungssystem kann alle Module umfassen, deren Ausführung zeitlich unkritisch ist. Durch die Verwendung eines Echtzeitsystems und eines Anwendungssystems in der Verbindungseinheit kann der Austausch der Prozessdaten über das externe Datennetzwerk von der Übertragung der Prozessdaten über den Feldbus zeitlich entkoppelt werden. Außerdem kann für die Übertragung der Prozessdaten über den Feldbus ein Feldbusprotokoll verwendet werden, dessen Ausführung eine Echtzeitumgebung voraussetzt.

Ein Überwachungssystem zur Anordnung in einer Feldebene eines Automatisierungssystems umfasst eine Verbindungseinheit zur Übertragung von Prozessdaten eines Automatisierungsprozesses des Automatisierungssystems zu einer externen Dateninfrastruktur und eine Signaleinheit. Die Signaleinheit ist dazu ausgebildet, mit dem Automatisierungsprozess über einen Feldanschluss verbunden zu werden. Eine Feldbusschnittstelle der Signaleinheit ist dazu ausgebildet, zum Zwecke des Austauschs der Prozessdaten über einen Feldbus mit der Verbindungseinheit verbunden zu werden.

Bei einer Weiterbildung des Überwachungssystems ist der Feldanschluss der Signaleinheit als eine weitere Feldbusschnittstelle ausgebildet. Die weitere Feldbusschnittstelle ist dazu ausgebildet, an einen Anlagenfeldbus des Automatisierungssystems angeschlossen zu werden, um auf dem Anlagenfeldbus ausgetauschte Anlagenfeldbusdaten als Prozessdaten mitzuprotokollieren. Dadurch können vorteilhafterweise die Anlagenfeldbusdaten als Prozessdaten über die Verbindungseinheit zu der externen Dateninfrastruktur übermittelt werden, ohne Rechenkapazitäten einer Steuereinheit des Automatisierungssystems zu belasten.

Ein Verfahren zum Betreiben eines Automatisierungssystems mit einer Verbindungseinheit zur Übertragung von Prozessdaten des Automatisierungssystems zwischen einer Signaleinheit, welche über einen Feldanschluss mit einem Automatisierungsprozess des Automatisierungssystems in Verbindung steht, und einer externen Dateninfrastruktur umfasst ein Austauschen der Prozessdaten zwischen der Verbindungseinheit und der Signaleinheit über einen Feldbus. Außerdem umfasst das Verfahren ein eigenständiges Veranlassen eines Austauschs der Prozessdaten zwischen der Verbindungseinheit und der externen Dateninfrastruktur über ein externes Datennetzwerk durch die Verbindungseinheit.

Bei dem Verfahrens wird der Austausch der Prozessdaten mittels eines Bereitstellens und mittels eines Abrufens einer die Prozessdaten umfassenden Netzwerknachricht durch die Verbindungseinheit veranlasst.

Eine Weiterbildung des Verfahrens umfasst als weiteren Schritt ein Erstellen von Eingangsprozessdaten, die einen Zustand des durch das Automatisierungssystem ausgeführten Automatisierungsprozesses repräsentieren, in der Signaleinheit. Außerdem umfasst das Verfahren ein Übertragen der Eingangsprozessdaten als Prozessdaten von der Signaleinheit zu der Verbindungseinheit im Rahmen des Austauschs der Prozessdaten über den Feldbus und ein Übertragen der Prozessdaten von der Verbindungseinheit zu der externen Dateninfrastruktur im Rahmen des Austauschs der Prozessdaten über das externe Datennetzwerk. Die Übertragung der Prozessdaten zu der externen Dateninfrastruktur ermöglicht es vorteilhafterweise, die Prozessdaten in der externen Dateninfrastruktur zu speichern, zu analysieren oder weiterzuverarbeiten und die Prozessdaten oder die Ergebnisse der Analyse über das externe Datennetzwerk weiteren Recheneinheiten, insbesondere Mobilgeräten, zur Verfügung zu stellen.

Eine Weiterbildung des Verfahrens umfasst ein Mitprotokollieren von Anlagenfeldbusdaten, die auf einem an die Signaleinheit angeschlossenen Anlagenfeldbus umlaufen, durch die Signaleinheit und ein Bereitstellen der mitprotokollierten Anlagenfeldbusdaten als die Eingangsprozessdaten, die einen Zustand des Automatisierungsprozesses repräsentieren, in der Signaleinheit.

Das Verfahrens umfasst ein Bereitstellen von Ausgangsprozessdaten als Prozessdaten durch die externe Dateninfrastruktur und ein Abrufen der Ausgangsprozessdaten von der externen Dateninfrastruktur durch die Verbindungseinheit im Rahmen des Austauschs der Prozessdaten über das externe Datennetzwerk. Bei einem derartigen Verfahren ist vorteilhafterweise ein bidirektionaler Datenaustausch zwischen der Verbindungseinheit und der externen Dateninfrastruktur über das externe Datennetzwerk möglich.

Eine Weiterbildung des Verfahrens umfasst ein Übertragen der Ausgangsprozessdaten von der Verbindungseinheit zu der Signaleinheit im Rahmen des Austauschs der Prozessdaten über den Feldbus und eine Beeinflussung des Automatisierungsprozesses durch die Signaleinheit auf Grundlage der Ausgangsprozessdaten. Bei einem derartigen Verfahren können vorteilhafterweise durch die externe Dateninfrastruktur zur Verfügung gestellte Rechenkapazitäten zur Ansteuerung von Aktoren, die an die Signaleinheit angeschlossen sind, verwendet werden. Außerdem können die an die Signaleinheit angeschlossenen Aktoren vorteilhafterweise auf Grundlage von Eingangsdaten, die von beliebigen an das externe Datennetzwerk angeschlossenen Einheiten bereitgestellt werden, angesteuert werden.

Eine Weiterbildung des Verfahrens umfasst ein Anpassen der Konfiguration der Verbindungseinheit auf Grundlage der durch die Verbindungseinheit abgerufenen Ausgangsprozessdaten. Dadurch kann die externe Dateninfrastruktur, beispielswiese als Reaktion auf eine Auswertung von durch die Verbindungseinheit übermittelten Eingangsprozessdaten oder auf eine an die externe Dateninfrastruktur übermittelte Anfrage eines Empfängers der Prozessdaten, automatisiert eine Anpassung der Übermittlung der Eingangsprozessdaten erwirken, beispielsweise zur Erfassung der Eingangsprozessdaten in kürzeren Zeitabständen für eine genauere Erfassung des Zustands des Automatisierungsprozesses.

Eine Weiterbildung des Verfahrens umfasst ein Bereitstellen von Ausgangsprozessdaten als Prozessdaten durch die externe Dateninfrastruktur, ein Abrufen der Ausgangsprozessdaten von der externen Dateninfrastruktur durch eine Steuereinheit des Automatisierungssystems, eine Beeinflussung des Automatisierungsprozesses auf Grundlage der Ausgangsprozessdaten durch die Steuereinheit. Dadurch können vorteilhafterweise von der Signaleinheit erfasste und in der externen Dateninfrastruktur ausgewertete und verarbeitete Eingangsprozessdaten zur Steuerung des Automatisierungsprozesses genutzt werden.

Die Erfindung wird im Folgenden anhand von Figuren näher erläutert. Dabei zeigen in jeweils schematischer Darstellung:
- Fig. 1: ein erstes Automatisierungssystem mit einem ersten Überwachungssystem umfassend eine Verbindungseinheit;
- Fig. 2: ein zweites Automatisierungssystem mit dem ersten Überwachungssystem umfassend die Verbindungseinheit;
- Fig. 3: ein drittes Automatisierungssystem mit einem zweiten Überwachungssystem umfassend die Verbindungseinheit; und
- Fig. 4: die Verbindungseinheit im Zusammenhang mit dem ersten Überwachungssystem.

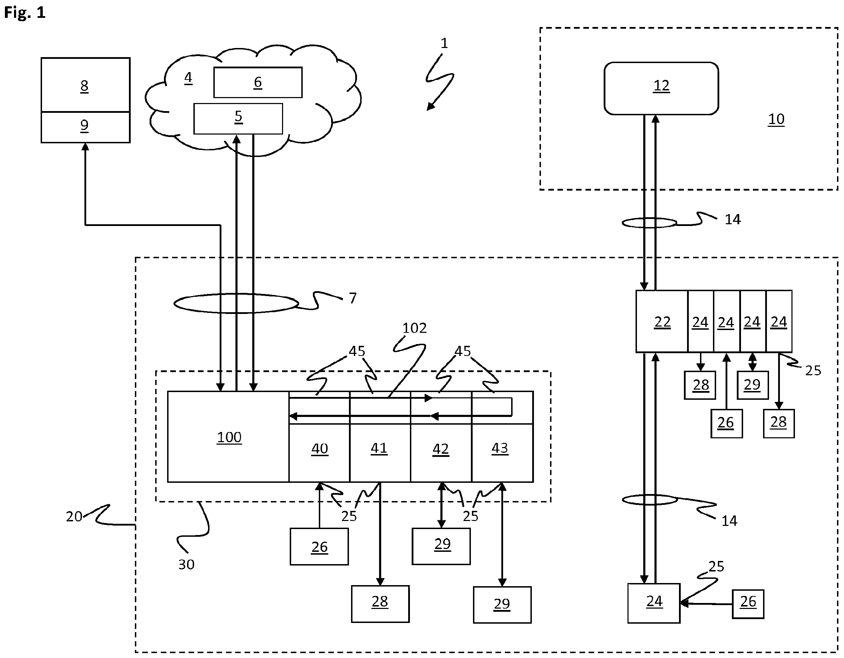

**Fig. 1** zeigt ein erstes Automatisierungssystem 1 zur Steuerung eines Automatisierungsprozesses. Das erste Automatisierungssystem 1 weist eine Steuereinheit 12 und mehrere Anlagensignaleinheiten 24 auf. Die Anlagensignaleinheiten 24 sind über Feldanschlüsse 25 mit Sensoren 26, Aktoren 28 oder Sensor-Aktor-Einheiten 29 des ersten Automatisierungssystems 1 verbunden. Über die Feldanschlüsse 25 und die Sensoren 26, die Aktoren 28 und die Sensor-Aktor-Einheiten 29 stehen die Anlagensignaleinheiten 24 mit dem Automatisierungsprozess in Verbindung. Die Sensoren 26, die Aktoren 28 und die Sensor-Aktor-Einheiten 29 können beispielsweise an einer von dem ersten Automatisierungssystem 1 gesteuerten Anlage oder Maschine angeordnet sein.

Über die Feldanschlüsse 25 tauschen die Anlagensignaleinheiten 24 und die Sensoren 26, die Aktoren 28 und die Sensor-Aktor-Einheiten 29 Feldsignale aus, die beispielsweise als Eingangssignale einen Messwert repräsentieren, welcher von einem der Sensoren 26 oder einer der Sensor-Aktor-Einheiten 29 erfasst wurde und den Zustand des Automatisierungsprozesses charakterisiert. Als Ausgangssignale stellen die Feldsignale beispielsweise ein elektrisches Signal dar, welches einen der Aktoren 28 oder eine der Sensor-Aktor-Einheiten 29 ansteuert und so den Zustand des Automatisierungsprozesses beeinflusst bzw. verändert. Die Sensor-Aktor-Einheiten 29 tauschen also sowohl Eingangs-, als auch Ausgangssignale mit den Anlagensignaleinheiten 24 aus.

Die Steuereinheit 12 und die Anlagensignaleinheiten 24 sind über einen Anlagenfeldbus 14 miteinander verbunden. Bei dem Anlagenfeldbus 14 handelt es sich um eine Datenleitung für den Austausch von Steuerdaten zur Steuerung des Automatisierungsprozesses. Der Anlagenfeldbus 14 kann beispielsweise auf dem EtherCAT-, dem Profibus oder dem CAN-Bus-Standard basieren. Die über den Anlagenfeldbus 14 zwischen der Steuereinheit 12 und den Anlagensignaleinheiten 24 ausgetauschten Steuerdaten umfassen Eingangsdaten, welche die von den Anlagensignaleinheiten 24 erfassten Messwerte repräsentieren, und Ausgangsdaten, welche die an die Anlagensignaleinheiten 24 zu übertragenden Steuerdaten repräsentieren. In den Anlagensignaleinheiten 24 erfolgt eine Umsetzung zwischen den Steuerdaten auf dem Anlagenfeldbus 14 und den mit den Sensoren 26, Aktoren 28 und Sensor-Aktor-Einheiten 29 ausgetauschten Feldsignalen.

Die Anlagensignaleinheiten 24 können entweder direkt an den Anlagenfeldbus 14 angeschlossen sein, oder mit dem Anlagenfeldbus 14 über eine Koppeleinheit 22 verbunden sein. Bei einer Verbindung über die Koppeleinheit 22 sind die betreffenden Anlagensignaleinheiten 24 über eine Datenleitung mit der Koppeleinheit 22 verbunden und die Koppeleinheit 22 sendet die auf dem Anlagenfeldbus 14 umlaufenden Steuerdaten an die mit ihr verbundenen Anlagensignaleinheiten 24 weiter. Die Datenleitung zwischen der Koppeleinheit 22 und den Analgensignaleinheiten 24 kann beispielsweise ebenfalls als ein Feldbus ausgebildet sein.

Die Steuereinheit 12 fungiert als übergeordnete Steuereinheit, welche die Eingangsdaten, die den Zustand des Automatisierungsprozesses charakterisieren und beispielsweise auf den von den Sensoren 26 erfassten Eingangssignalen basieren, einliest und zu den Ausgangsdaten weiterverarbeitet, die eine Änderung des Zustands des Automatisierungsprozesses durch die an die Aktoren 28 ausgegebenen Ausgangssignale veranlassen. Zur Erzeugung der Ausgangsdaten werden die Eingangsdaten gemäß einem auf der Steuereinheit 12 ablaufenden Steuerprogramm logisch miteinander verknüpft.

Das erste Automatisierungssystem 1 kann in eine Steuerebene 10 und in eine Feldebene 20 unterteilt werden. Die Feldebene 20 umfasst dabei alle Geräte und Einheiten des Automatisierungssystems 1, welche die zur Steuerung des Automatisierungsprozesses benötigten Feldsignale und Steuerdaten einlesen und ausgeben, weiterleiten und gegebenenfalls ineinander umwandeln. In der Regel sind die Geräte der Feldebene 20 feldnah an den durch den Automatisierungsprozess zu steuernden Maschinen oder Anlagen angeordnet. Die Feldebene 20 umfasst insbesondere die Signaleinheiten 24, die Sensoren 26, die Aktoren 28, die Sensor-Aktor-Einheiten 29 und die Koppeleinheit 22. Die Geräte der Feldebene 20 bilden Feldgeräte des Automatisierungssystems 1.

Die Steuerebene 10 umfasst alle Geräte und Einheiten, die Eingangsdaten der Sensoren 26, 29, die den Zustand des Automatisierungsprozesses charakterisieren, zu Ausgangsdaten für die Aktoren 28, 29 verarbeiten und logisch verknüpfen. Insbesondere umfasst die Steuerebene 10 alle Geräte und Einheiten, auf denen Steuerprogramme zur Steuerung des Automatisierungsprozesses ablaufen, etwa die Steuereinheit 12.

In der Regel sind die Geräte der Feldebene 20 und die Geräte der Steuerebene 10 räumlich getrennt voneinander angeordnet. Die Geräte der Steuerebene 10 können aber auch in unmittelbarer Nähe zu den Geräten der Feldebene 20 angeordnet sein. In solch einem Fall können Feldebene 20 und Steuerebene 10 funktional dahingehend voneinander abgegrenzt werden, dass die Geräte der Steuerebene 10 Steuerdaten verarbeiten, etwa Eingangsdaten logisch verknüpfen, um Ausgangsdaten zu erzeugen, die Geräte der Feldebene 20 dagegen Steuerdaten und Feldsignale zwar weiterleiten, nicht jedoch logisch miteinander verknüpfen.

Bei dem in Fig. 1 dargestellten ersten Automatisierungssystem 1 sind die Geräte der Steuerebene 10 und die Geräte der Feldebene 20 räumlich voneinander getrennt in separaten Gehäusen angeordnet. Bei anderen Ausführungsformen des ersten Automatisierungssystems 1 können die Geräte der Steuerebene 10 und der Feldebene 20, also insbesondere die Steuereinheit 12 und die Signaleinheiten 24 in einem einzigen Gerät, insbesondere in einem gemeinsamen Gehäuse, integriert sein.

In der Feldebene 20 des ersten Automatisierungssystems 1 ist neben den Signaleinheiten 24 auch ein erstes erfindungsgemäßes Überwachungssystem 30 als Feldgerät angeordnet. Das Überwachungssystem 30 ist dazu ausgebildet, Prozessdaten des von der Steuereinheit 12 gesteuerten Automatisierungsprozesses mit einer externen Dateninfrastruktur 4 auszutauschen. Hierzu umfasst das Überwachungssystem 30, ebenfalls als Feldgeräte, eine Verbindungseinheit 100 und eine erste Signaleinheit 40, eine zweite Signaleinheit 41, eine dritte Signaleinheit 42 und eine weitere dritte Signaleinheit 43.

Die zwischen den Signaleinheiten 40, 41, 42, 43 und der externen Dateninfrastruktur 4 ausgetauschten Prozessdaten des Automatisierungsprozesses können, wie die zwischen der Steuereinheit 12 und den Anlagensignaleinheiten 24 ausgetauschten Ein- und Ausgangsdaten, eingehende Prozessdaten bzw. Eingangsprozessdaten oder ausgehende Prozessdaten bzw. Ausgangsprozessdaten sein. Als Eingangsprozessdaten werden die Prozessdaten von den Signaleinheiten 40, 41, 42, 43 zu der externen Dateninfrastruktur 4 übertragen, wobei die Prozessdaten einen Zustand oder einen physikalischen Parameter des Automatisierungsprozesses darstellen können, beispielsweise eine Temperatur, einen Druck oder einen Schalterzustand. Als Ausgangsprozessdaten werden die Prozessdaten von der externen Dateninfrastruktur 4 an die Signaleinheiten 40, 41, 42, 43 übertragen, wobei die Prozessdaten in den Automatisierungsprozess auszugebende Daten darstellen können, etwa zur Ansteuerung eines Aktors. Die Eingangsprozessdaten korrespondieren damit mit den von den Anlagensignaleinheiten 24 auf dem Anlagenfeldbus 14 versendeten Eingangsdaten, die Ausgangsdaten mit den von den Anlagensignaleinheiten 24 über den Anlagenfeldbus 14 empfangenen Ausgangsdaten.

An die erste Signaleinheit 40 des ersten Überwachungssystems 30 ist über einen Feldanschluss 25 ein Sensor 26 angeschlossen, welcher mit dem Automatisierungsprozess in Verbindung steht, etwa an einer gesteuerten Anlage oder Maschine angeordnet ist, und Messwerte, die an die externe Dateninfrastruktur 4 übertragen werden sollen, erfasst. Der Sensor 26 kann beispielsweise einen Druck, eine Temperatur, einen Energieverbrauch oder eine Vibration erfassen. An die zweite Signaleinheit 41 ist über einen Feldanschluss 25 ein Aktor 28 angeschlossen, der wie der Sensor 26 mit dem Automatisierungsprozess in Verbindung steht und den Automatisierungsprozess auf Grundlage von Steuerwerten beeinflussen kann. Die Aktoren können beispielsweise als Ventile, Relais oder Motoren ausgebildet sein. An die dritten Signaleinheiten 42, 43 sind jeweils Sensor-Aktor-Einheiten 29 angeschlossen, die sowohl Messwerte erfassen, als auch durch Steuerwerte beeinflusst werden können. Zur Anbindung der Sensoren und Aktoren sind die Feldanschlüsse 25 der Signaleinheiten 40, 41, 42, 43 als digitale und/oder analoge Ein- und/oder Ausgänge ausgebildet. Die Mess- und Steuerwerte werden über die Feldanschlüsse 25 in Form von Eingangs- bzw. Ausgangssignalen übertragen.

Die Verbindungseinheit 100 ist in der Feldebene 20 des ersten Automatisierungssystems 1 angeordnet und als Feldgerät ausgebildet. Als solches ist die Verbindungseinheit 100 dazu ausgebildet, die Prozessdaten zwischen den Signaleinheiten 40, 41, 42, 43 und der externen Dateninfrastruktur 4 weiterzuleiten, sie dient jedoch nicht der Steuerung des Automatisierungsprozesses. Insbesondere führt sie keine logische Verknüpfung der Prozessdaten zum Zwecke der Prozesssteuerung aus.

Die Signaleinheiten 40, 41, 42, 43 und die Verbindungseinheit 100 sind für den Austausch der Prozessdaten über einen Feldbus 102 miteinander verbunden. Die Verbindungseinheit 100 und die externe Dateninfrastruktur 4 sind für den Austausch der Prozessdaten über ein externes Datennetzwerk 7 verbunden.

Über die Verbindungseinheit 100 können die Prozessdaten zwischen den Signaleinheiten 40, 41, 42, 43 und der externen Dateninfrastruktur 4 übertragen werden. Das Übertragen der Prozessdaten umfasst dabei ein Austauschen der Prozessdaten zwischen der Verbindungseinheit 100 und den Signaleinheiten 41, 41, 42, 43 über den Feldbus 100. Außerdem umfasst das Übertragen der Prozessdaten ein Austauschen der Prozessdaten zwischen der Verbindungseinheit 100 und der externen Dateninfrastruktur 4 über das externe Datennetzwerk 7. Der Austausch der Prozessdaten über das externe Datennetzwerk 7 wird dabei durch die Verbindungseinheit 100 aktiv und eigenständig veranlasst. Insbesondere wird der Austausch der Prozessdaten über das externe Datennetzwerk 7 oder das Einlesen und Ausgeben der Prozessdaten über den Feldbus 102 von der Verbindungseinheit 100 unabhängig von der Steuereinheit 12 veranlasst. Auch das Einlesen und Ausgeben der die Messwerte bzw. die Steuerwerte repräsentierenden Feldsignale durch das Überwachungssystem 30 erfolgt eigenständig und insbesondere unabhängig von der Steuereinheit 12 und/oder den Anlagensignaleinheiten 24.

Das Austauschen der Prozessdaten über den Feldbus 102 und über das externe Datennetzwerk 7 umfasst jeweils sowohl ein Übertragen von Eingangsprozessdaten von den Signaleinheiten 40, 41, 42, 43 über die Verbindungseinheit 100 zu der externen Dateninfrastruktur 4, als auch ein Übertragen von Ausgangsprozessdaten von der externen Dateninfrastruktur 4 über die Verbindungseinheit 100 zu den Signaleinheiten 40, 41, 42, 43.

Vor dem Datenaustausch liest die Signaleinheit 40 die Eingangssignale, die den Zustand des durch das erste Automatisierungssystem 1 gesteuerten Automatisierungsprozess repräsentieren, über den Feldanschluss 25 von dem Sensor 26 ein. Die erste Signaleinheit 40 erstellt auf Grundlage der eingelesenen Eingangssignale Prozessdaten als Eingangsprozessdaten, welche ebenfalls den Zustand des durch das Automatisierungssystem ausgeführten Automatisierungsprozesses repräsentieren. Von der ersten Signaleinheit 40 werden die Eingangsprozessdaten im Rahmen des Austauschs der Prozessdaten über den Feldbus 102 an die Verbindungseinheit 100 übertragen. Nach dem Empfang über den Feldbus 102 überträgt die Verbindungseinheit 100 die Prozessdaten über das externe Datennetzwerk 7 an die externe Dateninfrastruktur 4 weiter.

Die externe Dateninfrastruktur 4 kann als sogenannte "Cloud" datenbasierte Dienste anbieten. Hierfür kann die externe Dateninfrastruktur 4 einen Datendienst 6 ausführen, welcher die an die externe Dateninfrastruktur 4 übermittelten Prozessdaten verarbeitet, beispielsweise speichert, analysiert oder auf sonstige Weise auswertet. Die externe Dateninfrastruktur 4 kann auch mehrere der Datendienste 6 bereitstellen. Die externe Dateninfrastruktur 4 kann dazu ausgebildet sein, die Prozessdaten oder die Ergebnisse der Analyse oder Verarbeitung über das externe Datennetzwerk 7 einer weiteren Anwendung, beispielsweise einer auf einem weiteren Rechner oder einem mobilen Endgerät ablaufenden Anwendung, zur Verfügung zu stellen. Auf der externen Dateninfrastruktur 4 können die Prozessdaten auch mittels Methoden des maschinellen Lernens ("machine learning") oder des "data-minings" analysiert bzw. verarbeitet werden.

Die externe Dateninfrastruktur 4 kann auch dazu ausgebildet sein, Prozessdaten als Ausgangsprozessdaten bereitzustellen. Die Ausgangsprozessdaten können beispielsweise durch den Datendienst 6 auf Grundlage der zuvor von der Signaleinheit 40 übermittelten Eingangsprozessdaten erstellt werden, um den Zustand des Automatisierungsprozesses zu beeinflussen. Auf diese Weise können beispielsweise Steuerungsfunktionen des Automatisierungsprozesses auf der externen Dateninfrastruktur 4 abgearbeitet werden. Die Ausgangsprozessdaten können aber auch auf Grundlage von Daten erstellt worden sein, die der externen Dateninfrastruktur 4 von anderen Einheiten, beispielsweise von weiteren Verbindungseinheiten oder von einer Steuereinheit, über das externe Datennetzwerk 7 zur Verfügung gestellt werden.

Die Ausgangsprozessdaten können im Rahmen des Austauschs der Prozessdaten zwischen der externen Dateninfrastruktur 4 und der Verbindungseinheit 100 durch die Verbindungseinheit 100 von der externen Dateninfrastruktur 4 abgerufen werden. Hierauf werden die Prozessdaten über das externe Datennetzwerk 7 an die Verbindungseinheit 100 zum Empfang übertragen.

Beispielsweise können die Ausgangsprozessdaten von der externen Dateninfrastruktur 4 zur Ansteuerung des an der zweiten Signaleinheit 41 angeschlossenen Aktors 28 bereitgestellt werden. Von der Verbindungseinheit 100 können die Prozessdaten im Rahmen des Austauschs der Prozessdaten über den Feldbus 102 an die zweite Signaleinheit 41 übertragen werden. Die zweite Signaleinheit 41 empfängt die Ausgangsprozessdaten über den Feldbus 102 und beeinflusst den Automatisierungsprozess auf Grundlage der Ausgangsprozessdaten. Beispielsweise kann die zweite Signaleinheit 41 über ihren Feldanschluss 25 den Aktor 28 mittels auf Grundlage der Ausgangsprozessdaten erstellten Ausgangssignalen ansteuern.

Die an die dritten Signaleinheiten 42, 43 angeschlossenen Sensor-Aktor-Einheiten 29 können zum einen als Sensoren Eingangssignale einlesen, zum anderen können sie als Aktoren mittels Ausgangssignalen angesteuert werden. Wie die erste Signaleinheit 40, wandeln die dritten Signaleinheiten 42, 43 die Eingangssignale in Eingangsprozessdaten zur Übermittelung an die externe Dateninfrastruktur 4 um und leiten die Eingangsprozessdaten über den Feldbus 102 an die Verbindungseinheit 100 weiter. Wie die zweite Signaleinheit 41, empfangen die dritten Signaleinheiten 42, 43 die Ausgangsprozessdaten, wandeln sie in Ausgangssignale um und geben die Ausgangssignale an die Sensor-Aktor-Einheiten 29 aus.

Die Verbindungseinheit 100 und die Signaleinheiten 40, 41, 42, 43 sind dazu ausgebildet, die Prozessdaten über den Feldbus 102 gemäß einem festgelegten Feldbusprotokoll bzw. -standard zu übertragen. Bei dem Feldbusstandard kann es sich beispielsweise um den EtherCAT-, den Profibus-, den Interbus- oder den CAN-Bus-Standard handeln. Der Feldbus 102 für die Übertragung der Prozessdaten an die Verbindungseinheit 100 und der Anlagenfeldbus 14 für die Übertragung der Steuerdaten können auf dem gleichen oder auf unterschiedlichen Feldbusprotokollen bzw. -standards basieren. Zum Anschluss an den Feldbus 102 weisen die Signaleinheiten 40, 41, 42, 43 jeweils eine Feldbusschnittstelle 45 auf, welche die jeweiligen Standards bzw. Protokolle implementiert.

Bei dem externen Datennetzwerk 7 kann es sich beispielsweise um ein kabelgebundenes Netzwerk, beispielsweise um ein Ethernet-Netzwerk, oder um ein funkbasiertes Netzwerk handeln. Die externe Dateninfrastruktur 4 kann auf einem lokalen, in der Nähe des ersten Automatisierungssystems 1 angeordneten Rechnersystem basieren. In diesem Fall kann das externe Datennetzwerk 7 beispielsweise ein lokales Netzwerk (LAN) umfassen oder daraus bestehen. Die externe Dateninfrastruktur 4 kann auch auf einem entfernten Rechnersystem basieren. Dabei kann das externe Datennetzwerk 7 auch das Internet umfassen, so dass die externe Dateninfrastruktur 4 im Prinzip weltweit angeordnet sein kann.

Der Austausch der Prozessdaten zwischen der Verbindungseinheit 100 und der externe Dateninfrastruktur 4 bzw. dem Datendienst 6 kann über einen gegenseitigen Austausch von Netzwerknachrichten erfolgen. Der Austausch der Netzwerknachrichten kann von einem Nachrichtenverteilermodul 5 koordiniert werden. Dabei müssen die Netzwerknachrichten nicht direkt zwischen dem Verteilermodul 5 und dem Datendienst 6 bzw. einer die Prozessdaten empfangenden weiteren Anwendung ausgetauscht werden. Vielmehr könne die Verbindungseinheit 100 und der Datendienst 6 bzw. die weitere Anwendung die Netzwerknachrichten mit den Prozessdaten jeweils mit dem Nachrichtenverteilermodul 5 austauschen, welches dann die Weiterleitung der Netzwerknachrichten an den jeweiligen Empfänger übernimmt.

Die Verbindungseinheit 100 und der Datendienst 6 bzw. die weitere Anwendung werden also nicht direkt miteinander gekoppelt, sondern kommunizieren nur indirekt über das Nachrichtenverteilermodul 5 miteinander. Dies ermöglicht einen zeitlich und räumlich entkoppelten Betrieb der Verbindungseinheit 100 als Sender der Netzwerknachrichten und den Empfängern der Netzwerknachrichten. Das Nachrichtenverteilermodul 5 kann dazu ausgebildet sein, einen plattform- und betriebssystemunabhängigen Austausch der Netzwerknachrichten zu ermöglichen.

Das Nachrichtenverteilermodul 5 kann eine Nachrichten-Warteschlange ("message-queue") für die Netzwerknachrichten bereitstellen. Es kann auch einen sogenannten "message-broker" umfassen, welcher die Netzwerknachrichten validiert, umwandelt und/oder weiterleitet. Das Nachrichtenverteilermodul 5 kann als eine Softwareanwendung auf der externen Dateninfrastruktur 4 ausgeführt werden. Bei dem Nachrichtenverteilermodul 5 kann es sich beispielsweise um eine sogenannte nachrichtenorientierte Middleware handeln. Der Austausch der die Prozessdaten enthaltenden Netzwerknachrichten mit dem Nachrichtenverteilermodul 5 kann beispielsweise über das MQTT-Protokoll oder das AMQP-Protokoll erfolgen.

Die Verbindungseinheit 100 und das erste Automatisierungssystem 1 können dazu ausgebildet sein, dass die Verbindungseinheit 100 den Austausch der Prozessdaten über das externe Datennetzwerk 7 veranlasst. Dies umfasst sowohl das Senden der Eingangsprozessdaten an die, als auch das Empfangen der Ausgangsprozessdaten von der externen Dateninfrastruktur 4.

Dabei können sowohl die Eingangsprozessdaten, als auch die Ausgangsprozessdaten jeweils über von der Verbindungseinheit 100 ausgehende Datenverbindungen über das externe Datennetzwerk 7 ausgetauscht werden. Beispielsweise kann das Senden der Eingangsprozessdaten über das externe Datennetzwerk 7 an die externe Dateninfrastruktur 4 veranlasst werden, indem die Verbindungseinheit 100 die Eingangsprozessdaten für den Versand zur Verfügung stellt. Dabei fungiert die Verbindungseinheit 100 als aktiver Sender der Ausgangsprozessdaten, welcher den Versand der Prozessdaten aktiv selbst veranlasst. Das Empfangen der Ausgangsprozessdaten über das externe Datennetzwerk 7 kann durch die Verbindungseinheit 100 veranlasst werden, indem die Verbindungseinheit 100 die Ausgangsprozessdaten über das externe Datennetzwerk abruft. Dabei fungiert die Verbindungseinheit 100 als aktiver Empfänger der Ausgangsprozessdaten, welcher den Empfang der Prozessdaten aktiv selbst veranlasst.

So kann der Versand der Netzwerknachrichten mit den Prozessdaten von der Verbindungseinheit 100 zu der externen Dateninfrastruktur 4 durch die Verbindungseinheit 100 veranlasst werden. Beispielsweise kann die Verbindungseinheit 100 die Netzwerknachricht mit den Eingangsprozessdaten für eine Übertragung über das externe Datennetzwerk 7 bereitstellen. Die Netzwerknachricht kann zum Beispiel dem Nachrichtenverteilermodul 5 für die Übertragung zu anderen Einheiten oder Anwendungen bereitgestellt werden. Die Verbindungseinheit 100 kann dazu ausgebildet sein, die zu sendenden Prozessdaten als sogenannter Publisher anhand allgemeiner Kriterien zu charakterisieren.

Auch der Empfang der Netzwerknachrichten mit den Prozessdaten durch die Verbindungseinheit 100 von der externen Dateninfrastruktur 4 kann durch die Verbindungseinheit 100 veranlasst werden. Beispielsweise kann die Verbindungseinheit 100 die Netzwerknachrichten von der externen Dateninfrastruktur 4 abrufen. Die Netzwerknachricht kann zum Beispiel von dem Nachrichtenverteilermodul 5 abgerufen werden. Die Verbindungseinheit 100 kann die zu empfangenden Prozessdaten als ein sogenannter Subscriber ebenfalls lediglich anhand allgemeiner Kriterien spezifizieren.

Bei den Kriterien, die die durch die Verbindungseinheit 100 zu sendenden oder zu empfangenden Prozessdaten charakterisieren, kann es sich beispielsweise jeweils um die durch die Prozessdaten repräsentierten Mess- bzw. Stellgrößen oder um die Art und Weise ihrer Gewinnung, insbesondere die ihnen zugeordneten Signaleinheiten 40, 41, 42, 43, handeln.

Der Austausch der Prozessdaten über den Feldbus 102 kann zwischen der Verbindungseinheit 100 und den Signaleinheiten 40, 41, 42, 43 periodisch in festgelegten ersten Zeitabständen erfolgen. Der periodische Austausch der Prozessdaten kann das Empfangen der Eingangsprozessdaten und/oder das Senden der Ausgangsprozessdaten durch die Verbindungseinheit 100 umfassen.

Für den periodischen Austausch der Prozessdaten kann die Verbindungseinheit 100 dazu ausgebildet sein, periodisch ein Datentelegramm zu erstellen und über den Feldbus 102 zu den Signaleinheiten 40, 41, 42, 43 übertragen. Der Feldbus 102 kann als ein Ringbus ausgebildet sein, auf dem das Datentelegramm die Signaleinheiten 40, 41, 42, 43 der Reihe nach durchläuft und anschließend an die Verbindungseinheit 100 zurückgeleitet wird. Die erste, dritte und weitere dritte Signaleinheit 40, 42, 43 können in das von der Verbindungseinheit 100 erstellte Datentelegramm die Eingangsprozessdaten einfügen, die sie auf Grundlage der über ihre Feldanschlüsse 25 eingelesenen Feldsignale erstellt haben, um die Prozessdaten an die Verbindungseinheit 100 zu senden. Zusätzlich kann die Verbindungseinheit 100 die Ausgangsprozessdaten, die an die zweite, dritte und weitere dritte Signaleinheit 41, 42, 43 weitergeleitet werden sollen, als Prozessdaten in das erstellte Datentelegramm einfügen. Die zweite, dritte und weitere dritte Signaleinheit 41, 42, 43 können dazu ausgebildet sein, dem umlaufenden Datentelegramm die für sie bestimmten Prozessdaten zur Ansteuerung der an den Feldanschlüsse 25 angeschlossenen Aktoren 28, 29 zu entnehmen.

Die Verbindungseinheit 100 ist dazu ausgebildet, die Prozessdaten automatisiert, insbesondere unabhängig von der Steuerung des Automatisierungsprozesses durch die Steuereinheit 12, mit der externen Dateninfrastruktur 4 auszutauschen. Außerdem bedarf es für den Austausch der Prozessdaten zwischen der Verbindungseinheit 100 und der externen Dateninfrastruktur 4 keiner Abfrage der Verbindungseinheit 100, insbesondere keiner Abfrage durch eine die Prozessdaten verarbeitenden Anwendung wie des Datendienstes 6.

Der Austausch der Prozessdaten über das externe Datennetzwerk 7 kann zwischen der Verbindungseinheit 100 und der externen Dateninfrastruktur 4 ebenfalls periodisch in festgelegten zweiten Zeitabständen erfolgen. Der periodische Austausch der Prozessdaten kann das Senden der Eingangsprozessdaten und/oder das Empfangen der Ausgangsprozessdaten durch die Verbindungseinheit 100 umfassen. Dabei können die zweiten Zeitabstände den ersten Zeitabständen zur Übertragung der Prozessdaten über den Feldbus 102 entsprechen. Die zweiten Zeitabstände können aber auch kleiner oder größer sein als die ersten Zeitabstände. Die Verbindungseinheit 100 kann dazu ausgebildet sein, die Prozessdaten zwischenszuspeichern und gegebenenfalls gesammelt über das externe Datennetzwerk 7 oder den Feldbus 102 zu übertragen.

Der Austausch der Prozessdaten über das externe Datennetzwerk 7 kann aber auch ereignisgesteuert erfolgen. Hierbei kann die Verbindungseinheit 100 dazu ausgebildet sein, den Eintritt eines vorbestimmten, in der Verbindungseinheit 100 hinterlegten Ereignisses zu überprüfen. Das vorbestimmte Ereignis kann beispielswese darin bestehen, dass ein an die Verbindungseinheit 100 als Prozessdatum übermittelter Messwert einen vorbestimmten Grenzwert über- oder unterschreitet. Auch kann das Ereignis darin bestehen, dass ein als Prozessdatum übermittelter Messwert sich in vorbestimmter Weise, beispielsweise zeitlich, ändert. Das vorbestimmte Ereignis kann auch ein externes, die Verbindungseinheit 100 erreichendes Signal umfassen.

Bei einem Eintritt des hinterlegten Ereignisses veranlasst die Verbindungseinheit 100 den Austausch der Prozessdaten über das externe Datennetzwerk 7. Der Austausch kann umfassen das Versenden der Eingangsprozessdaten, die von der Verbindungseinheit 100 über den Feldbus 102 empfangen wurden, und das Empfangen der Ausgangsprozessdaten zur Weiterleitung über den Feldbus 102. Auch bei einem ereignisgesteuerten Austausch der Prozessdaten mit der externen Dateninfrastruktur 4 kann die Verbindungseinheit 100 dazu ausgebildet sein, die Prozessdaten zwischenszuspeichern und gegebenenfalls gesammelt über das externe Datennetzwerk 7 oder den Feldbus 102 zu übertragen.

Das erste Überwachungssystem 30 kann dazu ausgebildet sein, über das externe Datennetzwerk 7 parametrisiert bzw. konfiguriert zu werden. Dies kann sowohl eine Konfiguration der Verbindungseinheit 100, als auch eine Konfiguration der Signaleinheiten 40, 41, 42, 43 umfassen.

Die Konfiguration der Verbindungseinheit 100 kann beispielsweise Einstellungen der Softwaremodule und Datendienste umfassen, die für die Kommunikation mit der externen Dateninfrastruktur 4, insbesondere mit dem Nachrichtenverteilmodul 5, benötigt werden. Mittels der Konfiguration kann beispielsweise die externe Dateninfrastruktur 4, mit der sich die Verbindungseinheit 100 verbinden soll, festgelegt werden. Insbesondere können über die Konfiguration das Nachrichtenverteilmodul 5 und dessen Zugangsdaten bestimmt werden. Über die Konfiguration können auch die Protokolle für die Kommunikation mit dem Nachrichtenverteilmodul 5 festgelegt werden.

Werden für die Absicherung der Kommunikation zwischen der Verbindungseinheit 100 und der externen Dateninfrastruktur 4 Zertifikate oder eine Firewall verwendet, können im Rahmen der Konfiguration auch der Umgang mit den Zertifikaten und die Einstellungen der Firewall festgelegt werden. Auch können bei der Konfiguration beispielsweise Passwörter hinterlegt werden. Das erste Überwachungssystem 30 kann auch dazu ausgebildet sein, die Prozessdaten verschlüsselt mit der externen Dateninfrastruktur 4 auszutauschen. Dabei kann die Konfiguration der Verbindungseinheit 100 eine Konfiguration der Verschlüsselung umfassen.

Über die Konfiguration des ersten Überwachungssystems 30 kann auch die Handhabung der Prozessdaten durch das erste Überwachungssystem 30, insbesondere durch die Verbindungseinheit 100 oder die Signaleinheiten 40, 41, 42, 43 festgelegt werden. Dies umfasst Einstellungen, welche Prozessdaten von den Signaleinheiten 40, 41, 42, 43 erfasst und/oder an die Signaleinheiten 40, 41, 42, 43 ausgegeben werden. Weiterhin kann über die Konfiguration gegebenenfalls das Ereignis festgelegt werden, bei dessen Eintritt der Austausch der Prozessdaten zwischen der Verbindungseinheit 100 und der externen Dateninfrastruktur 4 erfolgen soll.

Die Konfiguration des ersten Überwachungssystems 30 kann auch die Konfiguration des Feldbusses 102 umfassen. Beispielsweise können über die Konfiguration die Zeitpunkte des Austauschs der Prozessdaten festgelegt werden, etwa die ersten Zeitabstände für die Übertragung der Datentelegramme über den Feldbus 102.

Für die Konfiguration des ersten Überwachungssystems 30 über das externe Datennetzwerk 7 kann von einem externen Rechner 8, der an das externe Datennetzwerk 7 angeschlossen ist, auf die Verbindungseinheit 100 zugegriffen werden. Insbesondere kann der externe Rechner 8 für den Zugriff auf die Verbindungseinheit 100 ein Zugriffsmodul 9 aufweisen, welches beispielsweise als eine auf dem externen Rechner 8 ausgeführte Softwareanwendung ausgebildet sein kann. Dem Zugriffsmodul 9 werden von der Verbindungseinheit 100 die für die Konfiguration des ersten Überwachungssystems 30 benötigten Daten als Konfigurationsdaten zur Verfügung gestellt. Die Konfigurationsdaten können unter anderem die bei der Konfiguration einstellbaren Parameter der Verbindungseinheit 100, des Feldbusses 102 und/oder der Signaleinheiten 40, 41, 42, 43 umfassen.

Die Konfiguration des ersten Überwachungssystems 30 kann beispielsweise über eine durch die Verbindungseinheit 100 über das externe Datennetzwerk 7 bereitgestellte Website erfolgen. In solch einem Fall kann das Zugriffsmodul 9 einen die Website aufrufenden Webbrowser umfassen. Die Konfiguration des ersten Überwachungssystems 30 kann auch mittels einer direkten Datenverbindung zwischen dem externen Rechner 8 und der Verbindungseinheit 100 über das externe Datennetzwerk 7 erfolgen. Alternativ oder zusätzlich kann die Konfiguration des ersten Überwachungssystems 30 auch über Netzwerknachrichten erfolgen, deren Austausch zwischen einer Anwendung zur Konfiguration des Verbindungsmoduls 100, beispielsweise dem Zugriffsmodul 9, und dem Verbindungsmodul 100 durch das Nachrichtenverteilmodul 5 koordiniert wird.

Eine Anpassung der Konfiguration des ersten Überwachungssystems 30 kann auch auf Grundlage von Ausgangsprozessdaten, die von der externen Dateninfrastruktur 4 an die Verbindungseinheit 100 übertragen werden, erfolgen. Beispielsweise kann der Datendienst 6 auf Grundlage der Verarbeitung der Eingangsprozessdaten Ausgangsprozessdaten zur Übermittlung an die Verbindungseinheit 100 erzeugen, mit denen die Konfiguration der Verbindungseinheit 100 angepasst wird. Dadurch können beispielsweise die zweiten Zeitabstände, in denen die Prozessdaten zwischen der Verbindungseinheit 100 und der externen Dateninfrastruktur 4 ausgetauscht werden, oder die ersten Zeitabstände, in denen die Prozessdaten zwischen der Verbindungseinheit 100 und den Signaleinheiten 40, 41, 42, 43 ausgetauscht werden, abhängig von der Analyse der Eingangsprozessdaten geändert werden. Dies ermöglicht es beispielsweise, die Zeitabstände zur Übermittelung der Prozessdaten bei Eintritt eines vorgegebenen Analyseergebnisses zu verkürzen und eine genauere Analyse auf Basis von engmaschiger erfassten Messwerten zu erstellen.

Das erste Überwachungssystem 30 ist als ein modulares System aufgebaut. Insbesondere sind die Signaleinheiten 40, 41, 42, 43 und die Verbindungseinheit 100 des ersten Überwachungssystems 30 jeweils als eigenständige Geräte in separaten Gehäusen ausgebildet und an den Feldbus 102 angeschlossen. Bei anderen Ausführungsformen des ersten Überwachungssystems 30 können auch weniger oder mehr als die vier in Fig. 1 dargestellten Signaleinheiten 40, 41, 42, 43 an den Feldbus 102 angeschlossen sein. Bei weiteren alternativen Ausführungsformen des ersten Überwachungssystems 30 können die Verbindungseinheit 100 und die mit dieser über den Feldbus 102 verbundenen Signaleinheiten 40, 41, 42, 43 auch einheitlich in einem gemeinsamen Gehäuse angeordnet sein. Das erste Überwachungssystem 30, insbesondere die Verbindungseinheit 100 und die Signaleinheiten 40, 41, 42, 43 können staub- und flüssigkeitsgeschützt ausgeführt sein, beispielsweise gemäß IP67.

Nachdem sowohl die Anlagensignaleinheiten 24 als auch die Signaleinheiten 40, 41, 42, 43 des Überwachungssystems 30 dazu ausgebildet sind, an einen Feldbus angeschlossen zu werden, können für die Anlagensignaleinheiten 24 und für die Signaleinheiten 40, 41, 42, 43 die gleiche Art Signaleinheiten eingesetzt werden. Insbesondere können die Anlagensignaleinheiten 24 und die Signaleinheiten 40, 41, 42, 43 jeweils identisch aufgebaut sein bzw. es kann es sich um die gleichen Signaleinheiten handeln.

Die Verbindungseinheit 100 kann dazu ausgebildet sein, mit anderen Verbindungseinheiten, die ausgebildet sind wie die Verbindungseinheit 100, an dem externen Datennetzwerk 7 in Reihe verbunden zu werden. Hierzu kann die Verbindungseinheit 100 zwei physikalische Anschlüsse für die Verbindung mit dem externen Datennetzwerk 7 und einen integrierten Netzwerk-Switch aufweisen, um auf dem externen Datennetzwerk 7 umlaufende Netzwerknachrichten bzw. Datenpakete von dem einem physikalischen Anschluss zu dem anderen physikalischen Anschluss weiterzuleiten. Die Verbindungseinheit 100 kann eine von außen zugängliche Schalteranordnung aufweisen, die dazu ausgebildet ist, die Netzwerkadresse der Verbindungseinheit 100 in dem externen Datennetzwerk 7 festzulegen. Bei der Schalteranordnung kann es sich beispielsweise um eine DIP-Schalteranordnung (dual-inline-package-Schalteranordnung) handeln.

Bei alternativen Ausführungsformen des ersten Automatisierungssystems 1 können das externe Datennetzwerk 7 und der Anlagenfeldbus 14 auch auf dem gleichen physikalischen Datennetzwerk basieren. Beispielsweise können sowohl die Steuerdaten auf dem Anlagenfeldbus 14, als auch die Prozessdaten auf dem externen Datennetzwerk 7 über dasselbe Ethernet-Netzwerk übertragen werden. In diesem Fall kann der Anlagenfeldbus 14 beispielsweise als EtherCAT-Feldbus oder als Profibus ausgebildet sein. Innerhalb der Feldbuszyklen des Anlagenfeldbusses 14 können dabei beispielsweise Zeiträume für die Übertragung der Prozessdaten reserviert sein.

Bei alternativen Ausführungsformen des ersten Automatisierungssystems 1 kann die externe Dateninfrastruktur 4 auch als Teil eines die Steuereinheit 12 umfassenden Rechnersystems ausgebildet sein. Insbesondere können der Datendienst 6 und das Nachrichtenverteilmodul 5, sowie die Steuereinheit 12 auf demselben Rechner, beispielsweise einem Industrie-PC, ausgeführt werden.

Bei all diesen Ausführungsformen ist jedoch das erste Überwachungssystem 30 des ersten Automatisierungssystems 1 funktional getrennt von dem Steuerungssystem zur Prozesssteuerung, insbesondere funktional getrennt von der Steuereinheit 12 und den mit der Steuereinheit 12 über den Anlagenfeldbus 14 verbundenen Anlagensignaleinheiten 24 ausgeführt. Dabei können die Steuereinheit 12 und die Anlagensignaleinheiten 24 insbesondere ein echtzeitfähiges Steuersystem bilden und über einen echtzeitfähigen Feldbus miteinander gekoppelt sein. Die Verbindungseinheit 100 des Überwachungssystems 30 und die externe Dateninfrastruktur 4 können über das externe Datennetzwerk ohne festgelegte Zeitvorgaben miteinander kommunizieren.

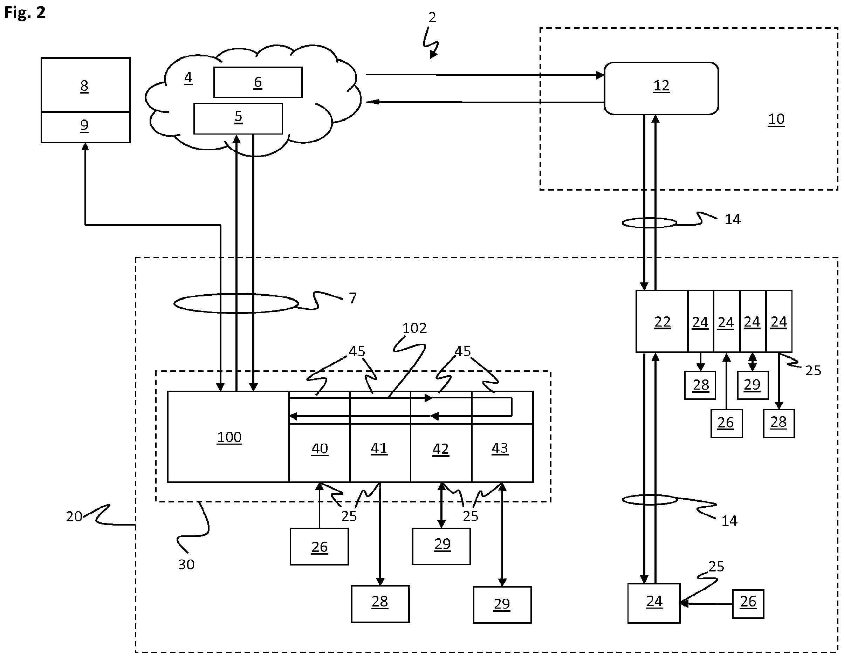

**Fig. 2** zeigt ein zweites Automatisierungssystem 2. Soweit im Folgenden keine Unterschiede beschrieben werden, ist das zweite Automatisierungssystem 2 ausgebildet wie das erste Automatisierungssystem 1. Insbesondere umfasst das zweite Automatisierungssystem 2 die Steuerebene 10 mit der Steuereinheit 12 und die Feldebene 20 mit den Anlagensignaleinheiten 24 und dem Überwachungssystem 30, welches seinerseits die Verbindungseinheit 100 und die Signaleinheiten 40, 41, 42, 43 umfasst.

Bei dem zweiten Automatisierungssystem 2 ist die Steuereinheit 12 dazu ausgebildet, wie die Verbindungseinheit 100, Daten mit der externen Dateninfrastruktur 4 auszutauschen. Dies kann ein Senden von Daten an die externe Dateninfrastruktur 4 und ein Empfangen von Daten von der externen Dateninfrastruktur 4 umfassen. Die Steuereinheit 12 kann beispielsweise dazu ausgebildet sein, als weitere Anwendung Netzwerknachrichten mit der externen Dateninfrastruktur 4, insbesondere mit dem Nachrichtenverteilmodul 5 auszutauschen. Dies kann auf die gleiche Art und Weise erfolgen, wie im Zusammenhang mit der Verbindungseinheit 100 beschrieben wird. Insbesondere kann die Steuereinheit 12 als sogenannter Publisher und/oder Subscriber Netzwerknachrichten mit dem Nachrichtenverteilmodul 5 austauschen.

Stellt die externe Dateninfrastruktur 4 Ausgangsprozessdaten bereit, kann die Signaleinheit 12 des zweiten Automatisierungssystems 2, wie die Verbindungseinheit 100, die Ausgangsprozessdaten von der externen Dateninfrastruktur 4 abrufen. Die Steuereinheit 12 des zweiten Automatisierungssystems 2 kann auf Grundlage der abgerufenen Prozessdaten beispielsweise den Automatisierungsprozess beeinflussen. Die Steuereinheit 12 kann beispielsweise die Ausgangsprozessdaten direkt an die Anlagensignaleinheiten 24 zur Ansteuerung der Aktoren 28 weiterleiten oder aber die Ausgangsprozessdaten selbst weiterverarbeiten.

Die von der Steuereinheit 12 des zweiten Automatisierungssystems 2 an die externe Dateninfrastruktur 4 gesendeten Daten kann die externe Dateninfrastruktur 4, wie die von der Verbindungseinheit 100 gesendeten Eingangsprozessdaten, verarbeiten, beispielsweise analysieren, speichern oder auf sonstige Weise bearbeiten. Insbesondere kann die externe Dateninfrastruktur 4 dazu ausgebildet sein, die Daten der Steuereinheit 12 und die Eingangsprozessdaten der Verbindungseinheit 100 logisch miteinander zu verknüpfen. Auch können die von der externen Dateninfrastruktur 4 bereitgestellten Ausgangsprozessdaten sowohl auf den Daten der Steuereinheit 12, als auch auf den Daten der Verbindungseinheit 100 basieren.

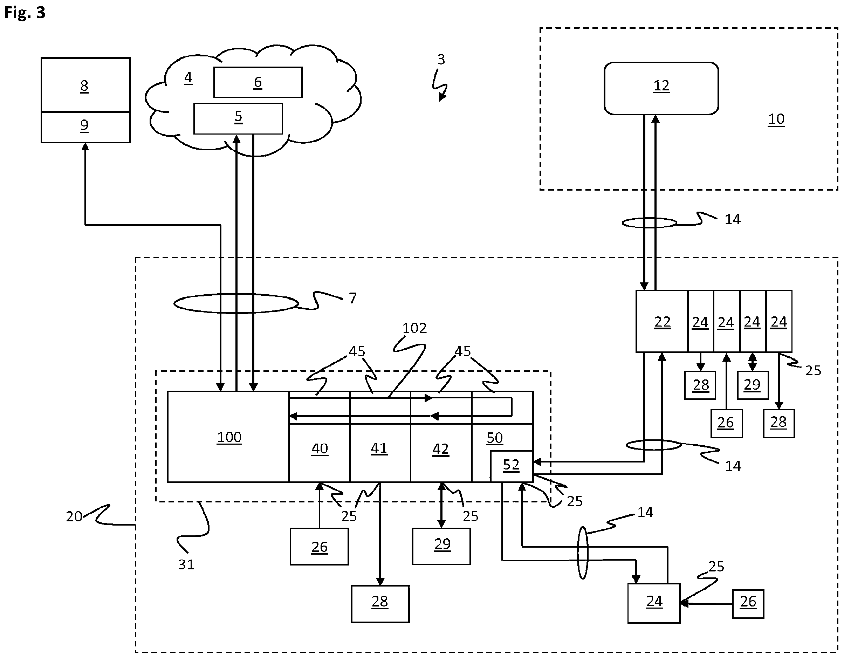

**Fig. 3** zeigt ein drittes Automatisierungssystem 3. Soweit im Folgenden keine Unterschiede beschrieben werden, ist das dritte Automatisierungssystem 3 ausgebildet wie das erste Automatisierungssystem 1 oder das zweite Automatisierungssystem 2. Insbesondere umfasst das dritte Automatisierungssystem 3 die Steuerebene 10 mit der Steuereinheit 12 und die Feldebene 20 mit den Anlagensignaleinheiten 24.

Das dritte Automatisierungssystem 3 umfasst eine zweite Überwachungseinheit 31. Soweit im Folgenden keine Unterschiede beschrieben werden, ist die zweite Überwachungseinheit 31 ausgebildet wie die erste Überwachungseinheit 30. Insbesondere umfasst die zweite Überwachungseinheit 31 das Verbindungsmodul 100 zur Anbindung der zweiten Überwachungseinheit 31 an das externe Datennetzwerk 7, sowie die erste Signaleinheit 40, die zweite Signaleinheit 41 und die dritte Signaleinheit 42.

Anstelle der weiteren dritten Signaleinheit 43 umfasst das zweite Überwachungssystem 31 eine vierte Signaleinheit 50. Wie die Signaleinheiten 40, 41, 42, 43 ist auch die vierte Signaleinheit 50 über eine Feldbusschnittstelle 45 an den Feldbus 102 der zweiten Überwachungseinrichtung 31 angeschlossen. Über den Feldbus 102 kann die vierte Signaleinheit 50 Prozessdaten mit der Verbindungseinheit 100 auf die gleiche Art und Weise austauschen, wie die Signaleinheiten 40, 41, 42, 43.

Die vierte Signaleinheit 50 weist einen Feldanschluss 25 auf, der bei der vierten Signaleinheit als eine zweite Feldbusschnittstelle 52 ausgebildet ist. Über die zweite Feldbusschnittstelle 52 ist die vierte Signaleinheit 50 an den Anlagenfeldbus 14 angeschlossen, der in dem dritten Automatisierungssystem 3 die Steuereinheit 12 mit den Anlagensignaleinheiten 24 verbindet. Die auf dem Anlagenfeldbus 14 umlaufenden Anlagenfeldbusdaten durchlaufen damit die vierte Signaleinheit 50.

Die vierte Signaleinheit 50 ist dazu ausgebildet, die auf dem Anlagenfeldbus 14 umlaufenden Anlagenfeldbusdaten als Prozessdaten des Automatisierungsprozesses mitzuprotokollieren und als Eingangsprozessdaten, die einen Zustand des Automatisierungsprozesses repräsentieren, bereitzustellen. Außerdem ist die vierte Signaleinheit 50 dazu ausgebildet, alle oder einen Teil der mitprotokollierten Anlagenfeldbusdaten als Prozessdaten über den Feldbus 102 an die Verbindungseinheit 100 weiterzuleiten, welche die Prozessdaten wiederum an die externe Dateninfrastruktur 4 senden kann.

Bei den mitprotokollierten und/oder bei den als Prozessdaten weitergeleiteten Anlagenfeldbusdaten kann es sich beispielsweise um alle auf dem Anlagenfeldbus umlaufenden Daten handeln. Die vierte Signaleinheit 50 kann aber nur ausgewählte Anlagenfeldbusdaten, insbesondere in einer Konfiguration der Verbindungseinheit 100 oder der vierten Signaleinheit 50 festgelegte Anlagenfeldbusdaten mitprotokollieren bzw. weiterleiten. Insbesondere kann es sich bei den mitprotokollierten Daten um die Steuerdaten handeln, welche die von den Sensoren 26 erfassten Messwerte oder für die Aktoren 28 bestimmten Steuerwerte umfassen.

Die vierte Signaleinheit 50 kann auch dazu ausgebildet sein, lediglich Fehlerdaten mitzuprotokollieren und/oder über den Feldbus 102 weiterzuleiten. Bei den Fehlerdaten kann es sich um Daten handeln, die eine Fehlfunktion des Anlagenfeldbusses 14 oder von mit dem Anlagenfeldbus 14 verbundenen Einheiten, beispielsweise der Signaleinheiten 24, der an die Signaleinheiten 24 angeschlossen Sensoren 26, Aktoren 28 bzw. Sensor-Aktor-Einheiten 29 oder der Steuereinheit 12 betreffen.

Die vierte Signaleinheit 50 kann auch dazu ausgebildet sein, auf dem Anlagenfeldbus 14 umlaufende Konfigurationsdaten mitzuprotokollieren bzw. weiterzuleiten. Bei den Konfigurationsdaten kann es sich beispielsweise um Daten handeln, die die Topologie und/oder die Diagnose des Anlagenfeldbusses 14 oder der mit dem Anlagenfeldbus 14 verbundenen Einheiten betreffen.

Das Mitprotokollieren der auf dem Anlagenfeldbus 14 umlaufenden Anlagenfeldbusdaten durch die vierte Signaleinheit 50 erfolgt eigenständig und unabhängig von der Steuerung des Automatisierungsprozesses durch die Steuereinheit 12 und die Anlagensignaleinheiten 24. Insbesondere fungiert die vierte Signaleinheit 50 nicht als Feldbusteilnehmer des Anlagenfeldbusses 14. Die vierte Signaleinheit 50 ist derart in den Anlagenfeldbus 14 eingebunden, dass sie bei einer Konfiguration des Anlagenfeldbusses 14 oder bei der Erstellung von Datentelegrammen für den Anlagenfeldbus 14 unberücksichtigt bleibt. Die vierte Signaleinheit 50 agiert damit an dem Anlagenfeldbus 14 lediglich als passive Monitoreinheit.

Das zweite Überwachungssystem 31 des dritten Automatisierungssystems 3, ist wie das erste Überwachungssystem 30 des ersten und zweiten Automatisierungssystems 1, 2, eigenständig ausgebildet, insbesondere ist es dazu ausgebildet, die Feldsignale eigenständig einzulesen und auszugeben und die auf dem Anlagenfeldbus 14 umlaufenden Anlagenfeldbusdaten eigenständig und unabhängig mitzuprotokollieren und als Prozessdaten für den Austausch mit der externen Dateninfrastruktur 4 bereitzustellen. Auch ist die Verbindungseinheit 100 des zweiten Überwachungssystems 31 dazu ausgebildet, den Austausch der Prozessdaten mit der externen Dateninfrastruktur 4 eigenständig zu veranlassen.

Das zweite Überwachungssystem 31 ist funktional getrennt und unabhängig von dem Steuerungssystem zur Prozesssteuerung, insbesondere von der Steuereinheit 12 und der mit dieser über den Anlagenfeldbus 14 verbundenen Anlagensignaleinheiten 24. Das Steuerungssystem und das zweite Überwachungssystem 31 stehen lediglich über die an den Anlagenfeldbus 14 angeschlossene vierte Signaleinheit 50 miteinander in Verbindung. Die vierte Signaleinheit 50 fungiert dabei lediglich als passive Monitoreinheit an dem Anlagenfeldbus 14 und ist aus Sicht des Steuerungssystems, insbesondere aus Sicht der Steuereinheit 12 und der Signaleinheiten 24, kein Feldbusteilnehmer des Anlagenfeldbusses 14.

Selbst wenn in den Figuren 1 bis 3 die Steuereinheit 12 und die zugehörigen Einheiten 22, 24 und der Anlagenfeldbus 14 gemeinsam mit dem ersten Überwachungssystem 30, der externen Dateninfrastruktur 4 und dem externen Datennetzwerk 7 dargestellt sind, so schränkt das die Erfindung nicht dahingehend ein, dass zur Ausübung der erfinderischen Lehre stets auch eine Steuereinheit 12, die zugehörigen Einheiten 22, 24 und der Anlagenfeldbus 14 erforderlich sind. Das erfindungsgemäße Automatisierungssystem 1 kann beispielsweise von den in den Figuren 1 bis 3 dargestellten Komponenten auch nur das Überwachungssystem 30, welches seinerseits die Verbindungseinheit 100 und die Signaleinheiten 40, 41, 42, 43 umfasst, die externe Dateninfrastruktur 4 und das externe Datennetzwerk 7 umfassen oder aus diesen bestehen.

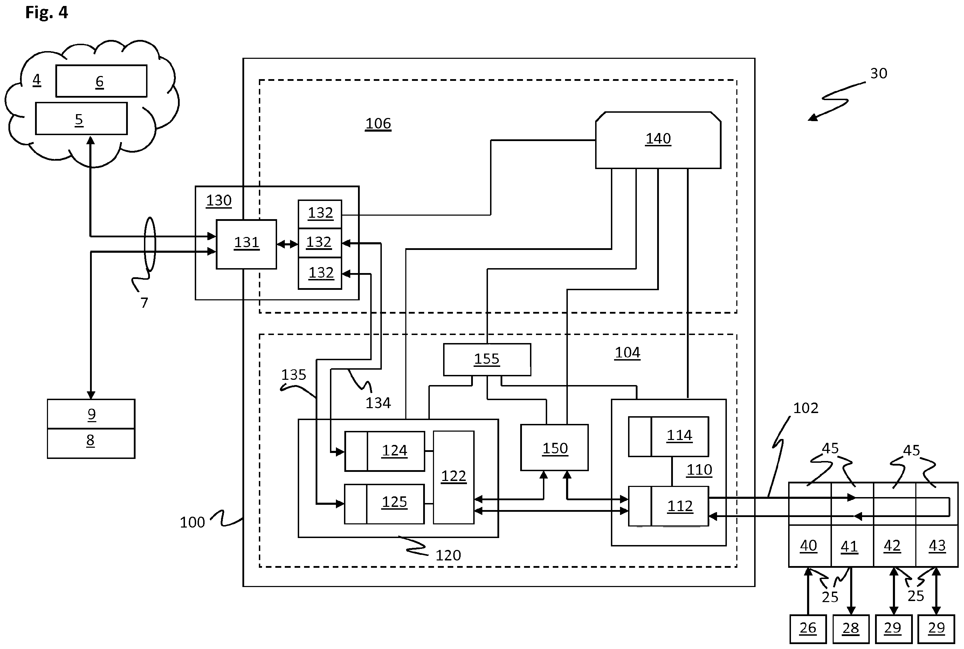

**Fig. 4** zeigt eine detaillierte Darstellung der Verbindungseinheit 100 im Zusammenhang mit dem ersten Überwachungssystem 30. Die Verbindungseinheit 100 umfasst ein Feldbusmodul 110, ein Netzwerkmodul 130 und ein Schnittstellenmodul 120.

Das Feldbusmodul 110 ist dazu ausgebildet, an den Feldbus 102, der die Verbindungseinheit 100 und die Signaleinheiten 40, 41, 42, 43 miteinander verbindet, angeschlossen zu werden und die Prozessdaten mit den Signaleinheiten 40, 41, 42, 43 auszutauschen. Dabei ist das Feldbusmodul 110 an das für die Kommunikation auf dem Feldbus 102 verwendete Feldbusprotokoll angepasst. Handelt es sich bei dem Feldbusprotokoll um ein nach dem Master-Slave-System arbeitendes Protokoll, kann das Feldbusmodul 110, wie in Fig. 4 dargestellt, einen Busmaster 112 aufweisen.

Der Busmaster 112 ist dazu ausgebildet, die Kommunikation auf dem Feldbus 102, insbesondere den Austausch der Prozessdaten zwischen den Signaleinheiten 40, 41, 42, 43 und der Verbindungseinheit 100 zu steuern. Der Busmaster 112 kann hierzu ein Datentelegramm erstellen und einen Umlauf des Datentelegramms über den Feldbus 102 steuern. Beispielsweise kann das Erstellen des Datentelegramms durch den Busmastern 112 und das Umlaufen des Datentelegramms auf dem Feldbus 102 periodisch in den festgelegten ersten Zeitabständen erfolgen.

Der Busmaster 112 ist dazu ausgebildet, dem erstellten Datentelegramm die an die Signaleinheiten 41, 42, 43 zu sendenden Ausgangsprozessdaten einzufügen. Außerdem ist der Busmaster 112 dazu ausgebildet, dem empfangenen Datentelegramm die durch die Signaleinheiten 40, 42, 43 eingefügten Eingangsprozessdaten zu entnehmen. Der Busmaster 112 kann einen integrierten Halbleiterchip umfassen, beispielsweise einen ASIC oder ein entsprechend programmiertes FPGA. Alternativ oder zusätzlich kann der Busmaster 112 auch ein oder mehrere Softwaremodule, beispielsweise einen Feldbus-Treiber, etwa einen EtherCAT-Treiber, umfassen.

Das Schnittstellenmodul 120 ist mit dem Feldbusmodul 110 verbunden, um die über den Feldbus 102 zu sendenden Ausgangsprozessdaten und die über den Feldbus 102 empfangenen Eingangsprozessdaten mit dem Felsbusmodul 110 auszutauschen. Außerdem ist das Schnittstellenmodul 120 mit dem Netzwerkmodul 130 verbunden, um die Eingangsprozessdaten über das Netzwerkmodul 130 an die externe Dateninfrastruktur 4 weiterzuleiten und die Ausgangsprozessdaten über das Netzwerkmodul 130 von der externen Dateninfrastruktur 4 abzurufen.

Das Netzwerkmodul 130 ist dazu ausgebildet, die Prozessdaten über das externe Datennetzwerk 7 mit der externen Dateninfrastruktur 4 auszutauschen. Für den Austausch der Prozessdaten zwischen der Verbindungseinheit 100 und der externen Dateninfrastruktur 4 ist das Netzwerkmodul 130 dazu ausgebildet an das externe Datennetzwerk 7 angeschlossen zu werden. Hierzu umfasst das Netzwerkmodul 130 eine physikalische Schnittstelle, welche beispielsweise als eine Ethernet-Schnittstelle ausgebildet sein kann.

Das Schnittstellenmodul 120 ist dazu ausgebildet, den eigenständigen und unabhängigen Austausch der Prozessdaten zwischen der Verbindungseinheit 100 und der externen Dateninfrastruktur 4 zu veranlassen. Insbesondere kann das Schnittstellenmodul 120 den Austausch der Prozessdaten periodisch in den zweiten Zeitabständen oder ereignisgesteuert bei Eintritt des hinterlegten Ereignisses veranlassen. Hierzu kann das Schnittstellenmodul 120 dazu ausgebildet sein, den Eintritt des hinterlegten Ereignisses zu überprüfen.

Für den Austausch der Prozessdaten mit der externen Dateninfrastruktur 4 weist das Schnittstellenmodul 120 ein Sendemodul 124 und ein Empfangsmodul 125 aufn. Das Sendemodul 124 ist dazu ausgebildet, im Rahmen des Austauschs der Prozessdaten das eigenständige Senden der Prozessdaten über das externe Datennetzwerk 7, beispielsweise in Form der bereitgestellten Netzwerknachrichten, zu veranlassen. Das Senden der Prozessdaten kann das Sendemodul 124 beispielsweise veranlassen, indem es über das Netzwerkmodul 130 einen Sendekanal 134 öffnet, über welchen die Prozessdaten übertragen werden können. Das Sendemodul 124 kann dem Nachrichtenverteilmodul 5 die Netzwerknachrichten mit den Prozessdaten zur weiteren Verteilung übermitteln. Dabei kann das Sendemodul 124 als sogenannter Publisher fungieren.

Das Empfangsmodul 125 ist dazu ausgebildet, im Rahmen des Austauschs der Prozessdaten das eigenständige Empfangen der Prozessdaten über das externe Datennetzwerk 7, beispielsweise in Form der abgerufenen Netzwerknachrichten, zu veranlassen. Den Empfang der Prozessdaten kann das Empfangsmodul 125 beispielsweise veranlassen, indem es über das Netzwerkmodul 130 einen Empfangskanal 135 öffnet, über welchen die Prozessdaten übertragen werden können. Das Empfangsmodul 125 kann von dem Nachrichtenverteilmodul 5 die Netzwerknachrichten mit den Prozessdaten abrufen. Dabei kann das Empfangsmodul 125 als sogenannter Subscriber fungieren. Erfolgt kein bidirektionaler Austausch der Prozessdaten mit der externen Dateninfrastruktur 4, kann das Schnittstellenmodul 120 auch nur das Sendemodul 124 oder nur das Empfangsmodul 125 umfassen.

Für die Kommunikation über das externe Datennetzwerk 7, insbesondere für den Austausch der Prozessdaten, kann das Netzwerkmodul 130, wie in Fig. 4 gezeigt, einen oder mehrere Netzwerksockets 132 zur Verfügung stellen. Die Netzwerksockets 132 bilden innerhalb der Verbindungseinheit 100 eine Schnittstelle zu dem externen Datennetzwerk 7. Insbesondere können die Netzwerksockets 132 in Ergänzung zu der physikalischen Schnittstelle 131 eine Softwareschnittstelle bereitstellen. Das Sendemodul 124 ist dazu ausgebildet, den Sendekanal 134 über einen der Netzwerksockets 132 des Netzwerkmoduls 130 eigenständig zu öffnen. Ebenso ist das Empfangsmodul 125 dazu ausgebildet, den Empfangskanal 135 über einen weiteren der Netzwerksockets 132 eigenständig zu öffnen.

Die Verbindungseinheit 100 umfasst ein Echtzeitsystem 104 und ein Anwendungssystem 106. Das Echtzeitsystem 104 stellt eine Echtzeitumgebung zur Ausführung zeitkritischer Module der Verbindungseinheit 100 bereit. Beispielsweise kann das Echtzeitsystem 104 eine Umgebung zur Realisierung harter Echtzeitanforderungen bereitstellen. Unter anderem ist sichergestellt, dass die von dem Echtzeitsystem 104 umfassten Module innerhalb vorgegebener Zeiten von ihnen ausgeführte Aufgaben beenden oder Daten bereitstellen, empfangen bzw. weiterleiten. Bei der Verbindungseinheit 100 umfasst das Echtzeitsystem 104 unter anderem das Feldbusmodul 110 und das Schnittstellenmodul 120, so dass der Austausch der Prozessdaten zwischen dem Feldbusmodul 110 und dem Schnittstellenmodul 120 innerhalb der Echtzeitumgebung erfolgen kann. Bei dem Echtzeitsystem 104 kann es sich beispielsweise um ein TwinCAT-System und bei dem Anwendungssystem 106 um ein Windows-System handeln.

Das Anwendungssystem 106 umfasst alle Module der Verbindungseinheit 100, deren Ausführung zeitlich unkritisch ist, insbesondere Module, die zu variablen Zeiten Aufgaben beenden oder Daten bereitstellen, empfangen bzw. weiterleiten können. Bei der Verbindungseinheit 100 umfasst das Anwendungssystem 106 unter anderem das Netzwerkmodul 130. Damit ist das Schnittstellenmodul 120 dazu ausgebildet, als ein in der Echtzeitumgebung 104 ausgeführtes Modul den Sendekanal 134 und den Empfangskanal 135 direkt über das in der Anwendungsumgebung 106 ausgeführte Netzwerkmodul 130 zu öffnen. Insbesondere ist das Schnittstellenmodul 120 dazu ausgebildet, aus der Echtzeitumgebung 104 direkt die Netzwerksockets 132 des in dem Anwendungssystem 106 ausgeführten Netzwerkmoduls 130 zu öffnen.

Die Verbindungseinheit 100, insbesondere das Feldbusmodul 110, kann dazu ausgebildet sein, die Prozessdaten in einem Feldbusdatenformat über den Feldbus 102 zu übertragen. Bei dem Feldbusdatenformat kann es sich beispielsweise um ein binäres Datenformat oder um ein Klartext-Datenformat handeln. Das Feldbusdatenformat kann durch das auf dem Feldbus 102 implementierten Feldbusprotokoll festgelegt sein.

Die Verbindungseinheit 100, insbesondere das Netzwerkmodul 130 kann dazu ausgebildet sein, die Prozessdaten in einem Netzwerkdatenformat über das externe Datennetzwerk 7 auszutauschen. Das Netzwerkdatenformat kann sich von dem Feldbusdatenformat unterscheiden oder aber dem Feldbusdatenformat entsprechen. Das Netzwerkdatenformat kann ebenfalls ein Klartext-Datenformat oder ein binäres Datenformat sein. Beispielsweise kann das Netzwerkdatenformat das JSON-Datenformat sein.

Zur Umwandlung der Datenformate kann die Verbindungseinheit 100, wie in Fig. 4 dargestellt, ein Konvertierungsmodul 122 aufweisen. Beispielsweise kann das Konvertierungsmodul 122 Teil des Schnittstellenmoduls 120 sein. Das Konvertierungsmodul 122 ist dazu ausgebildet, die Prozessdaten zwischen dem Feldbusdatenformat und dem Netzwerkdatenformat zu konvertieren. Das Konvertierungsmodul 122 kann als Teil des Echtzeitsystems 104 der Verbindungseinheit 100 ausgebildet sein.

Die Verbindungseinheit 100 kann, wie in Fig. 4 ebenfalls dargestellt, ein Speichermodul 150 umfassen. Das Speichermodul 150 ist dazu ausgebildet, die Prozessdaten vor einer Weiterleitung über das externe Datennetzwerk 7 und/oder vor einer Weiterleitung über den Feldbus 102 in der Verbindungseinheit 100 zwischenzuspeichern. Das Speichermodul 150 kann die Prozessdaten insbesondere dann zwischenspeichern, wenn das Feldbusmodul 110 eingerichtet ist, die Prozessdaten periodisch in den ersten Zeitabständen über den Feldbus 102 auszutauschen, und das Schnittstellenmodul 120 dazu eingerichtet ist, die Prozessdaten periodisch in den zweiten Zeitabständen oder ereignisgesteuert über das externe Datennetzwerk 7 auszutauschen.

Die Verbindungseinheit 100 kann auch dazu ausgebildet sein, die Prozessdaten in dem Speichermodul 150 zwischenzuspeichern, falls die Verbindung zu der externen Dateninfrastruktur 4 über das externe Datennetzwerk 7 unterbrochen ist. Die gespeicherten Prozessdaten können dann nach einem Wiederherstellen der Verbindung über das externe Datennetzwerk 7 gesammelt an die externe Dateninfrastruktur 4 übertragen werden. Alternativ oder zusätzlich können die Prozessdaten auch gleichzeitig sowohl in dem Speichermodul gespeichert werden, als auch über das externe Datennetzwerk 7 weitergeleitet werden.

Das Speichermodul 150 kann einen Ringpuffer umfassen, in welchem alle von dem Feldbusmodul 110 empfangenen Prozessdaten eingefügt werden. Dabei können bei vollem Speichermodul 150 die jeweils ältesten Prozessdaten überschrieben werden. Das Speichermodul 150 kann beispielsweise eine in die Verbindungseinheit 100 integrierte oder einsteckbare Speicherkarte, beispielsweise als eine SD-Karte, umfassen. Das Speichermodul 150 kann auch einen in die Verbindungseinheit integrierten Speicherchip umfassen.

Bei alternativen Ausführungsformen der Verbindungseinheit 100 können die Prozessdaten das Speichermodul 150, das Konvertierungsmodul 122 und das Schnittstellenmodul 120 auch in einer anderen als der in Fig. 4 dargestellten Reihenfolge durchlaufen. Beispielsweise können die Prozessdaten nach dem Empfang über das Feldbusmodul 110 zunächst in dem Konvertierungsmodul 122 konvertiert werden und anschließend in dem Speichermodul 150 gespeichert werden.

Die Verbindungseinheit 100 kann auch eine Echtzeituhr 155 aufweisen, wie es in Fig. 4 dargestellt ist. Die Echtzeituhr 155 ist dazu ausgebildet, den Modulen der Verbindungseinheit 100 ein Zeitsignal zur Verfügung zu stellen. Bei dem Zeitsignal kann es sich beispielsweise um eine aktuelle Uhrzeit handeln. Beispielsweise kann die Echtzeituhr 155 ihr Zeitsignal dem Feldbusmodul 110, dem Schnittstellenmodul 120 und/oder dem Speichermodul 150 zur Verfügung stellen. Die Echtzeituhr 155 kann dazu ausgebildet sein, über das Netzwerkmodul 130 mit einer Referenzzeit aus dem externen Datennetzwerk 7 synchronisiert zu werden. Die Synchronisierung kann beispielsweise mittels des SNTP-Protokolls erfolgen.

Das Zeitsignal der Echtzeituhr 155 kann beispielsweise den Prozessdaten als Zeitstempel nach einem Empfang über den Feldbus 102 und vor einer Weiterleitung an die externe Dateninfrastruktur 4 über das Schnittstellenmodul 120 und das Netzwerkmodul 130 hinzugefügt werden. Das Hinzufügen des Zeitstempels kann insbesondere vor einem Speichern der Prozessdaten in dem Speichermodul 150 erfolgen. Die Echtzeituhr 155 kann als Teil des Echtzeitsystems 104 der Verbindungseinheit 100 ausgebildet sein.

Für die Absicherung des Austauschs über das externe Datennetzwerk 7 kann die Verbindungseinheit 100 ein, in Fig. 4 nicht dargestelltes Sicherheitsmodul umfassen. In dem Sicherheitsmodul können beispielsweise bei der Verschlüsselung verwendete Schlüssel bzw. Passwörter hinterlegt sein und verwaltete werden. Auch kann das Sicherheitsmodul Dienste zum Ver- und Entschlüsseln der Prozessdaten bereitstellen.

Bei dem Verschlüsselungsmodul kann es sich beispielsweise um einen TPM-Chip (trusted platform module chip) handeln.

Zur Konfiguration des ersten Überwachungssystems 30 umfasst die Verbindungseinheit 100 ein Servermodul 140. Das Servermodul 140 ist mit dem Netzwerkmodul 130 verbunden und dazu ausgebildet, dem Zugriffsmodul 9 des externen Rechners 8 über das externe Datennetzwerk 7 die für die Konfiguration der ersten Überwachungseinheit 30 benötigten Konfigurationsdaten zur Verfügung zu stellen. Das Servermodul 140 kann beispielsweise als ein Webserver ausgebildet sein, der die Konfigurationsdaten über eine von dem Zugriffsmodul 9 als Browser abrufbare Website zur Verfügung stellt. Alternativ oder zusätzlich kann das Servermodul 140 auch dazu ausgebildet sein, die Konfigurationsdaten über eine direkte Datenverbindung, beispielsweise in Form von Netzwerknachrichten, zur Verfügung zu stellen. Zur Anbindung an das externe Datennetzwerk ist das Servermodul 140, wie das Schnittstellenmodul 120, dazu ausgebildet, eine Verbindung zu einem der durch das Netzwerkmodul 130 bereitgestellten Netzwerksockets 132 aufzubauen.

Die Verbindungseinheit 100 ist dazu ausgebildet, das erste Überwachungssystem 30 auf Grundlage der Konfigurationsdaten zu konfigurieren. Durch eine Änderung der Konfigurationsdaten kann die Konfiguration des ersten Überwachungssystems 30 von dem Zugriffsmodul 9 des externen Rechners 8 über das Servermodul 140 geändert werden. Insbesondere können über das Servermodul 140 der Verbindungseinheit 100 das Schnittstellenmodul 120, das Speichermodul 150 und das Feldbusmodul 110 mit dem Feldbus 102 und den Signaleinheiten 40, 41, 42, 43 konfiguriert werden.

Die Konfiguration des Speichermoduls 150 umfasst unter anderem Einstellungen bezüglich der Zwischenspeicherung der Prozessdaten, beispielsweise Zeitpunkte und Dauer der Zwischenspeicherung und Zeitpunkte der Weiterleitung der gespeicherten Prozessdaten an die externe Dateninfrastruktur 4. Im Rahmen der Konfiguration des Schnittstellenmoduls 120 kann unter anderem festgelegt werden die Adresse der externen Dateninfrastruktur 4, die für die Kommunikation mit der externen Dateninfrastruktur 4 verwendeten Protokolle und Zugangsdaten, die zur Absicherung der Kommunikation verwendeten Zertifikate und Passwörter und die Art und Weise des Austauschs der Prozessdaten mit der externen Dateninfrastruktur 4.

Beispielsweise können die an die externe Dateninfrastruktur 4 weiterzuleitenden oder von der externen Dateninfrastruktur 4 abzurufenden Prozessdaten, sowie die Zeitpunkte des Datenaustauschs und gegebenenfalls das den Austausch der Prozessdaten auslösende Ereignis über die Konfiguration des Schnittstellenmoduls 120 festgelegt werden. Auch kann das für den Austausch mit der externen Dateninfrastruktur 4 verwendete Netzwerkdatenformat, wie etwa ein binäres Datenformat oder ein Klartextformat wie das JSON-Format, über die Konfiguration des Schnittstellenmoduls 120 ausgewählt werden.

Das Feldbusmodul 110 umfasst neben dem Busmaster 112 ein Konfigurationsmodul 114. Das Konfigurationsmodul 114 ist dazu ausgebildet, die Konfigurationsdaten für das Feldbusmodul 110, den Feldbus 102 und die Signaleinheiten 40, 41, 42, 43 bereitzustellen. Das Konfigurationsmodul 114 kann beispielsweise dazu ausgebildet sein, nach einer erstmaligen Bestückung des ersten Überwachungssystems 30 mit den Signaleinheiten 40, 41, 42, 43 die Konfigurationsdaten, die den Feldbus 102 und die Signaleinheiten 40, 41, 42, 43 betreffen, zu ermitteln und dem Servermodul 140 zur Verfügung zu stellen.

Das Konfigurationsmodul 114 ist dazu ausgebildet, eine Abfrage der an den Feldbus 120 angeschlossenen Signaleinheiten 40, 41, 42, 43 durch den Busmaster 112 zu veranlassen. Bei der Abfrage durch den Busmaster 112 können die Signaleinheiten 40, 41, 42, 43 dazu veranlasst werden, ihre aktuellen Konfigurationsdaten an den Busmaster 112 und das Konfigurationsmodul 114 zu übermitteln. Beispielsweise können die Signaleinheiten 40, 41, 42, 43 ihre Konfigurationsdaten in das auf dem Feldbus 102 umlaufende Datentelegramm einfügen und der Busmaster 112 die empfangenen Konfigurationsdaten an das Konfigurationsmodul 114 weiterleiten. Das Konfigurationsmodul 114 übermittelt dann die Konfigurationsdaten an das Servermodul 140. Die von dem Konfigurationsmodul 114 an das Servermodul 140 übermittelten Konfigurationsdaten können unter anderem umfassen eine Anzahl der an den Feldbus 102 angeschlossenen Signaleinheiten, jeweils den Typ der Signaleinheiten oder eine Anzahl oder Art der an den Signaleinheiten vorhandenen Feldanschlüsse. Das Konfigurationsmodul 114 ist auch dazu ausgebildet, nach einer Änderung der Konfigurationsdaten die geänderten Konfigurationsdaten von dem Servermodul 140 an den Busmaster 112 oder die Signaleinheiten 40, 41, 42, 43 weiterzuleiten.

Vor einer Inbetriebnahme der Überwachungssysteme 30, 31 wird die Verbindungseinheit 100 mit den Signaleinheiten 40, 41, 42, 43, 50 über den Feldbus 102 verbunden. Nach einer Inbetriebnahme der Überwachungssysteme 30, 31 können die Konfigurationsdaten des Feldbusses 102 und der Signaleinheiten 40, 41, 42, 43, 50 in die Verbindungseinheit 100 eingelesen werden, beispielsweise durch das Konfigurationsmodul 114 des Feldbusmoduls 110. Nach einem Anschluss der Verbindungseinheit 100 an das externe Datennetzwerk 7 kann über das Zugriffsmodul 9 des an das externe Datennetzwerk 7 angeschlossenen externen Rechners 8 auf die Konfigurationsdaten der Überwachungssysteme 30, 31, insbesondere auf die Konfigurationsdaten des Feldbusses 102 und der Signaleinheiten 40, 41, 42, 43, 50 zugegriffen werden. Der Zugriff kann beispielsweise über die durch das Servermodul 140 zur Verfügung gestellte Website erfolgen.

Über das Zugriffsmodul 9 des externen Rechners 8 können zur Konfiguration der Überwachungssystem 30, 31 die bereitgestellten Konfigurationsdaten geändert werden. Nach einem Zurückspielen der Konfigurationsdaten in die Module und Einheiten der Überwachungssysteme 30, 31, insbesondere in die Module der Verbindungseinheit 100 und in die Signaleinheiten 40, 41, 42, 43, 50 sind die Überwachungssysteme 30, 31 für den Austausch der Prozessdaten zwischen den Signaleinheiten 40, 41, 42, 43, 50 und der externen Dateninfrastruktur 4 konfiguriert.

Nachdem die Verbindungseinheit 100 der Überwachungssysteme 30, 31 dazu ausgebildet ist, die Prozessdaten eigenständig und unabhängig von der Steuerung der durch die Automatisierungssysteme 1, 2, 3 gesteuerten Automatisierungsprozesse, insbesondere unabhängig von der Steuereinheit 12 mit der externen Dateninfrastruktur auszutauschen, können die Überwachungssysteme 30, 31 einfach und kostengünstig in die Automatisierungssysteme 1, 2, 3 integriert werden oder in bestehenden Automatisierungssystemen nachgerüstet werden. Insbesondere können sie einfach und kostengünstig an bestehenden Anlagen, Maschinen oder Gebäuden nachgerüstet werden. Die Überwachungssysteme 30, 31 bieten eine eigenständige und von der Steuerung 12 unabhängige Lösung für die Erfassung und Verteilung der Prozessdaten.

Durch die Möglichkeit, universelle Protokolle für den Austausch der Prozessdaten über das externe Datennetzwerk 7 zu verwenden, können die Überwachungssysteme 30, 31 und die Verbindungseinheit 100 sowohl in öffentlichen, als auch in abgeschlossen, sowohl in weltweiten, als auch in lokalen externen Datennetzwerken verwendet werden. In der externen Dateninfrastruktur 4 können eine Vielzahl von Datendiensten zur Analyse, statistischen Auswertung, Verarbeitung, Überwachung oder Visualisierung der Prozessdaten ausgeführt werden. Außerdem können die Datendienste eingesetzt werden, um abhängig von den eingehenden Prozessdaten Benachrichtigungen über das externe Datennetzwerk 7 zu verschicken, beispielsweise zur Anforderung einer Wartung oder Reparatur.

### Bezugszeichenliste

- 1: erstes Automatisierungssystem
- 2: zweites Automatisierungssystem
- 3: drittes Automatisierungssystem
- 4: externe Dateninfrastruktur
- 5: Nachrichtenverteilmodul
- 6: Datendienste
- 7: externes Datennetzwerk
- 8: externer Rechner
- 9: Zugriffsmodul
- 10: Steuerebene
- 12: Steuereinheit
- 14: Anlagenfeldbus
- 20: Feldebene
- 22: Koppeleinheit
- 24: Anlagensignaleinheiten
- 25: Feldanschluss
- 26: Sensor
- 28: Aktor
- 29: Sensor-Aktor-Einheit
- 30: erstes Überwachungssystem
- 31: zweites Überwachungssystem
- 40: erste Signaleinheit
- 41: zweite Signaleinheit
- 42: dritte Signaleinheit
- 43: weitere dritte Signaleinheit
- 45: Feldbusschnittstelle
- 50: vierte Signaleinheit
- 52: zweite Feldbusschnittstelle

- 100: Verbindungseinheit
- 102: Feldbus
- 104: Echtzeitsystem
- 106: Anwendungssystem
- 110: Feldbusmodul
- 112: Busmaster
- 114: Konfigurationsmodul
- 120: Schnittstellenmodul
- 122: Konvertierungsmodul
- 124: Sendemodul
- 125: Empfangsmodul
- 130: Netzwerkmodul
- 131: physikalische Schnittstelle
- 132: Netzwerksocket
- 134: Sendekanal
- 135: Empfangskanal
- 140: Servermodul
- 150: Speichermodul
- 155: Echtzeituhr

## Patentansprüche

1. Verbindungseinheit (100) zur Übertragung von Prozessdaten eines Automatisierungsprozesses eines Automatisierungssystems (1, 2, 3) zu einer externen Dateninfrastruktur (4),
wobei die Verbindungseinheit (100) als Feldgerät zur Anordnung in einer Feldebene (20) des Automatisierungssystems (1, 2, 3)ausgebildet ist und ein Feldbusmodul (110), ein Netzwerkmodul (130) und ein Schnittstellenmodul (120) umfasst,
wobei das Feldbusmodul (110) an einen Feldbus (102) anschließbar und dazu ausgebildet ist, die Prozessdaten über den Feldbus (102) mit einer Signaleinheit (40, 41, 42, 43, 50), die mit dem Automatisierungsprozess über einen Feldanschluss (25) in Verbindung steht, auszutauschen,
wobei das Netzwerkmodul (130) an ein externes Datennetzwerk (7) anschließbar und dazu ausgebildet ist, die Prozessdaten über das externe Datennetzwerk (7) mit der externen Dateninfrastruktur (4) auszutauschen und dabei über das Datennetzwerk (7) Eingangsprozessdaten zu der externen Dateninfrastruktur (4) zu übertragen und Ausgangsprozessdaten von der externen Dateninfrastruktur (4) abzurufen,
wobei das Schnittstellenmodul (120) mit dem Netzwerkmodul (130) und dem Feldbusmodul (110) für einen Austausch der Prozessdaten zwischen dem Feldbusmodul (110) und dem Netzwerkmodul (130) verbunden ist,
**dadurch gekennzeichnet, dass**
das Schnittstellenmodul (120) dazu ausgebildet ist, den Austausch der Prozessdaten zwischen dem Netzwerkmodul (130) und der externen Dateninfrastruktur (4) eigenständig zu veranlassen,
wobei das Schnittstellenmodul (120) ein Sendemodul (124) umfasst, wobei das Sendemodul (124) dazu ausgebildet ist, das Übertragen der Eingangsprozessdaten durch ein Öffnen eines Sendekanals (134) über das Netzwerkmodul (130) zu veranlassen, um ein Senden einer die Eingangsprozessdaten umfassenden Netzwerknachricht zu veranlassen,
wobei das Schnittstellenmodul (120) ein Empfangsmodul (125) umfasst, wobei das Empfangsmodul (125) dazu ausgebildet ist, das Abrufen der Ausgangsprozessdaten durch ein Öffnen eines Empfangskanals (135) über das Netzwerkmodul (130) zu veranlassen, um ein Empfangen einer die Ausgangsprozessdaten umfassenden Netzwerknachricht zu veranlassen,
wobei die Verbindungseinheit (100) ein Echtzeitsystem (104) zur Ausführung zeitkritischer Module der Verbindungseinheit (100) und ein Anwendungssystem (106) zur Ausführung zeitlich unkritischer Module der Verbindungseinheit (100) aufweist, und
wobei das Echtzeitsystem (104) das Schnittstellenmodul (120) und das Feldbusmodul (110) und das Anwendungssystem (106) das Netzwerkmodul (130) umfasst.

2. Verbindungseinheit (100) nach Anspruch 1,
wobei die Eingangsprozessdaten einen Zustand oder einen physikalischen Parameter des Automatisierungsprozesses darstellen und die Ausgangsprozessdaten einen Zustand oder einen physikalischen Parameter des Automatisierungsprozesses darstellen.

3. Verbindungseinheit (100) nach Anspruch 2,
wobei das Sendemodul (124) dazu ausgebildet ist, die Netzwerknachricht mit den Eingangsprozessdaten einem Nachrichtenverteilmodul (5) der externen Dateninfrastruktur (4) zur Verteilung an einen Empfänger der Netzwerknachricht zu übermitteln.

4. Verbindungseinheit (100) nach Anspruch 3,
wobei das Nachrichtenverteilmodul (5) als nachrichtenorientierte Middleware und das Sendemodul (124) als Publisher fungiert.

5. Verbindungseinheit (100) nach einem der vorhergehenden Ansprüche,
wobei das Empfangsmodul (124) dazu ausgebildet ist, die Netzwerknachricht mit den Ausgangsprozessdaten von einem Nachrichtenverteilmodul (5) der externen Dateninfrastruktur (4) abzurufen.

6. Verbindungseinheit (100) nach Anspruch 5,
wobei das Nachrichtenverteilmodul (5) als nachrichtenorientierte Middleware und das Empfangsmodul (124) als Subscriber fungiert.

7. Verbindungseinheit (100) nach einem der vorhergehenden Ansprüche,
wobei das Schnittstellenmodul (120) dazu ausgebildet ist, den Austausch der Prozessdaten periodisch und/oder bei Eintritt eines in der Verbindungseinheit (100) hinterlegten Ereignisses zu veranlassen.

8. Verbindungseinheit (100) nach einem der vorhergehenden Ansprüche,
wobei das Feldbusmodul (110) dazu ausgebildet ist, die Prozessdaten über den Feldbus (102) periodisch mit der Signaleinheit (40, 41, 42, 43, 50) auszutauschen.

9. Verbindungseinheit (100) nach einem der vorhergehenden Ansprüche,
wobei das Feldbusmodul (110) ein Konfigurationsmodul (114) umfasst, welches dazu ausgebildet ist, eine Abfrage der an den Feldbus (102) angeschlossenen Signaleinheit (40, 41, 42, 43, 50) zu veranlassen und die Signaleinheit (40, 41, 42, 43, 50) betreffende Konfigurationsdaten zur Verfügung zu stellen.

10. Verbindungseinheit (100) nach einem der vorhergehenden Ansprüche mit einem Servermodul (140),
wobei das Servermodul (140) mit dem Netzwerkmodul (130) verbunden und dazu ausgebildet ist, einem Zugriffsmodul (9) eines mit dem Netzwerkmodul (130) über das externe Datennetzwerk (7) verbundenen externen Rechners (8) Konfigurationsdaten der Verbindungseinheit (100) zur Verfügung zu stellen, und
wobei die Verbindungseinheit (100) dazu ausgebildet ist, das Feldbusmodul (110) und/oder den Feldbus (102) und/oder die Signaleinheit (40, 41, 42, 43, 50) und/oder das Schnittstellenmodul (120) auf Grundlage der Konfigurationsdaten zu konfigurieren.

11. Verbindungseinheit (100) nach einem der vorhergehenden Ansprüche mit einem Konvertierungsmodul (122),
wobei das Feldbusmodul (110) dazu ausgebildet ist, die Prozessdaten in einem Feldbusdatenformat über den Feldbus (102) auszutauschen,
wobei das Netzwerkmodul (130) dazu ausgebildet ist, die Prozessdaten in einem Netzwerkdatenformat über das externe Datennetzwerk (7) zu übertragen, und
wobei das Konvertierungsmodul (122) dazu ausgebildet ist, die Prozessdaten zwischen dem Feldbusdatenformat und dem Netzwerkdatenformat zu konvertieren.

12. Verbindungseinheit (100) nach einem der vorhergehenden Ansprüche mit einem Speichermodul (150), welches dazu ausgebildet ist, die Prozessdaten nach einem Empfang über den Feldbus (102) und vor einem Versenden über das externe Datennetzwerk (7) zwischenzuspeichern.

13. Überwachungssystem (30, 31) zur Anordnung in einer Feldebene (20) eines Automatisierungssystems (1, 2, 3) mit
einer Verbindungseinheit (100) gemäß einem der vorhergehenden Ansprüche zur Übertragung von Prozessdaten eines Automatisierungsprozesses des Automatisierungssystems (1, 2, 3) zu einer externen Dateninfrastruktur (4) und mit einer Signaleinheit (40, 41, 42, 43, 50),
wobei die Signaleinheit (40, 41, 42, 43, 50) dazu ausgebildet ist, mit dem Automatisierungsprozess über einen Feldanschluss (25) verbunden zu werden,
wobei eine Feldbusschnittstelle (45) der Signaleinheit (40, 41, 42, 43, 50) dazu ausgebildet ist, zum Zwecke des Austauschs der Prozessdaten über einen Feldbus (102) mit der Verbindungseinheit (100) verbunden zu werden.

14. Überwachungssystem (30, 31) nach Anspruch 14,
wobei der Feldanschluss (25) der Signaleinheit (40, 41, 42, 43, 50) als eine weitere Feldbusschnittstelle (52) ausgebildet ist und
wobei die weitere Feldbusschnittstelle (52) dazu ausgebildet ist, an einen Anlagenfeldbus (14) des Automatisierungssystems (1, 2, 3) angeschlossen zu werden, um auf dem Anlagenfeldbus (14) ausgetauschte Anlagenfeldbusdaten als Prozessdaten mitzuprotokollieren.

15. Verfahren zum Betreiben eines Automatisierungssystems (1, 2, 3) mit einer Verbindungseinheit (100) zur Übertragung von Prozessdaten des Automatisierungssystems (1, 2, 3) zwischen einer Signaleinheit (40, 41, 42, 43, 50), welche über einen Feldanschluss (25) mit einem Automatisierungsprozess des Automatisierungssystems (1, 2, 3) in Verbindung steht, und einer externen Dateninfrastruktur (4),
wobei das Verfahren ein Austauschen der Prozessdaten zwischen der Verbindungseinheit (100) und der Signaleinheit (40, 41, 42, 43, 50) über einen Feldbus (102) umfasst,
wobei das Verbindungseinheit (100) als Feldgerät zur Anordnung in einer Feldebene (20) des Automatisierungssystems (1, 2, 3) ausgebildet ist und ein Feldbusmodul (110), ein Netzwerkmodul (130) und ein Schnittstellenmodul (120) umfasst,
wobei das Feldbusmodul (110) dazu ausgebildet ist, die Prozessdaten über den Feldbus (102) mit der Signaleinheit (40, 41, 42, 43, 50) auszutauschen,
wobei das Netzwerkmodul (130) an ein externes Datennetzwerk (7) anschließbar und dazu ausgebildet ist, die Prozessdaten über das externe Datennetzwerk (7) mit der externen Dateninfrastruktur (4) auszutauschen und dabei über das Datennetzwerk (7) Eingangsprozessdaten zu der externen Dateninfrastruktur (4) zu übertragen und Ausgangsprozessdaten von der externen Dateninfrastruktur (4) abzurufen,
wobei das Schnittstellenmodul (120) mit dem Netzwerkmodul (130) und dem Feldbusmodul (110) für einen Austausch der Prozessdaten zwischen dem Feldbusmodul (110) und dem Netzwerkmodul (130) verbunden ist, **dadurch gekennzeichnet,**
**dass** das Verfahren ein eigenständiges Veranlassen eines Austauschs der Prozessdaten zwischen der Verbindungseinheit (100) und der externen Dateninfrastruktur (4) über ein externes Datennetzwerk (7) durch das Schnittstellenmodul (120) der Verbindungseinheit (100) umfasst, und
**dass** der Austausch der Prozessdaten mittels eines Bereitstellens und mittels eines Abrufens einer die Prozessdaten umfassenden Netzwerknachricht durch die Verbindungseinheit (100) veranlasst wird,
wobei das Schnittstellenmodul (120) ein Sendemodul (124) umfasst, wobei das Sendemodul (124) dazu ausgebildet ist, das Übertragen der Eingangsprozessdaten durch ein Öffnen eines Sendekanals (134) über das Netzwerkmodul (130) zu veranlassen, um ein Senden einer die Eingangsprozessdaten umfassenden Netzwerknachricht zu veranlassen,
wobei das Schnittstellenmodul (120) ein Empfangsmodul (125) umfasst, wobei das Empfangsmodul (125) dazu ausgebildet ist, das Abrufen der Ausgangsprozessdaten durch ein Öffnen eines Empfangskanals (135) über das Netzwerkmodul (130) zu veranlassen, um ein Empfangen einer die Ausgangsprozessdaten umfassenden Netzwerknachricht zu veranlassen,
wobei die Verbindungseinheit (100) ein Echtzeitsystem (104) zur Ausführung zeitkritischer Module der Verbindungseinheit (100) und ein Anwendungssystem (106) zur Ausführung zeitlich unkritischer Module der Verbindungseinheit (100) aufweist, und
wobei das Echtzeitsystem (104) das Schnittstellenmodul (120) und das Feldbusmodul (110) und das Anwendungssystem (106) das Netzwerkmodul (130) umfasst.

16. Verfahren nach Anspruch 15, wobei das Verfahren als weitere Schritte umfasst:
- Erstellen der Eingangsprozessdaten, die einen Zustand des durch das Automatisierungssystem (1, 2, 3) ausgeführten Automatisierungsprozesses repräsentieren, in der Signaleinheit (40, 41, 42, 43, 50),
- Übertragen der Eingangsprozessdaten als Prozessdaten von der Signaleinheit (40, 41, 42, 43, 50) zu der Verbindungseinheit (100) im Rahmen des Austauschs der Prozessdaten über den Feldbus (102) und
- Übertragen der Prozessdaten von der Verbindungseinheit (100) zu der externen Dateninfrastruktur (4) im Rahmen des Austauschs der Prozessdaten über das externe Datennetzwerk (7).

17. Verfahren nach Anspruch 16, wobei das Verfahren als weitere Schritte umfasst:
- Mitprotokollieren von Anlagenfeldbusdaten, die auf einem an die Signaleinheit (40, 41, 42, 43, 50) angeschlossenen Anlagenfeldbus (14) umlaufen, durch die Signaleinheit (40, 41, 42, 43, 50) und
- Bereitstellen der mitprotokollierten Anlagenfeldbusdaten als die Eingangsprozessdaten, die einen Zustand des Automatisierungsprozesses repräsentieren, in der Signaleinheit (40, 41, 42, 43, 50).

18. Verfahren nach einem der Ansprüche 15 bis 17 umfassend als weitere Schritte umfasst:
- Bereitstellen der Ausgangsprozessdaten als Prozessdaten durch die externe Dateninfrastruktur (4) und
- Abrufen der Ausgangsprozessdaten von der externen Dateninfrastruktur (4) durch die Verbindungseinheit (100) im Rahmen des Austauschs der Prozessdaten über das externe Datennetzwerk (7).

19. Verfahren nach Anspruch 18, wobei das Verfahren als weitere Schritte umfasst:
- Übertragen der Ausgangsprozessdaten von der Verbindungseinheit (100) zu der Signaleinheit (40, 41, 42, 43, 50) im Rahmen des Austauschs der Prozessdaten über den Feldbus (102) und
- Beeinflussung des Automatisierungsprozesses durch die Signaleinheit (40, 41, 42, 43, 50) auf Grundlage der Ausgangsprozessdaten.

20. Verfahren nach einem der Ansprüche 18 bis 19 umfassend als weiteren Schritt:
- Anpassen der Konfiguration der Verbindungseinheit (100) auf Grundlage der durch die Verbindungseinheit (100) abgerufenen Ausgangsprozessdaten.

21. Verfahren nach einem der Ansprüche 15 bis 20 umfassend als weitere Schritte:
- Bereitstellen von Ausgangsprozessdaten als Prozessdaten durch die externe Dateninfrastruktur (4),
- Abrufen der Ausgangsprozessdaten von der externen Dateninfrastruktur (4) durch eine Steuereinheit (12) des Automatisierungssystems (1, 2, 3),
- Beeinflussung des Automatisierungsprozesses auf Grundlage der Ausgangsprozessdaten durch die Steuereinheit (12).

## Claims

1. Connecting unit (100) for transmitting process data of an automation process of an automation system (1, 2, 3) to an external data infrastructure (4),
wherein the connecting unit (100) is configured as a field device for arrangement on a field level (20) of the automation system (1, 2, 3) and
comprises a field bus module (110), a network module (130) and an interface module (120),
wherein the field bus module (110) is connectable to a field bus (102) and is configured to interchange the process data via the field bus (102) with a signal unit (40, 41, 42, 43, 50) connected to the automation process via a field connection (25),
wherein the network module (130) is connectable to an external data network (7) and is configured to interchange the process data via the external data network (7) with the external data infrastructure (4) and in so doing to use the data network (7) to transmit input process data to the external data infrastructure (4) and to retrieve output process data from the external data infrastructure (4),
wherein the interface module (120) is connected to the network module (130) and to the field bus module (110) for an interchange of the process data between the field bus module (110) and the network module (130),
**characterized in that**
the interface module (120) is configured to prompt the interchange of the process data between the network module (130) and the external data infrastructure (4) autonomously,
wherein the interface module (120) comprises a transmission module (124), wherein the transmission module (124) is configured to prompt the transmission of the input process data by opening a transmission channel (134) via the network module (130), in order to prompt sending of a network message comprising the input process data,
wherein the interface module (120) comprises a reception module (125), wherein the reception module (125) is configured to prompt retrieval of the output process data by opening a reception channel (135) via the network module (130), in order to prompt reception of a network message comprising the output process data,
wherein the connecting unit (100) has a realtime system (104) for executing time-critical modules of the connecting unit (100) and an application system (106) for executing non-time-critical modules of the connecting unit (100), and
wherein the realtime system (104) comprises the interface module (120) and the field bus module (110) and the application system (106) comprises the network module (130).

2. Connecting unit (100) according to Claim 1,
wherein the input process data depict a state or a physical parameter of the automation process and the output process data depict a state or a physical parameter of the automation process.

3. Connecting unit (100) according to Claim 2,
wherein the transmission module (124) is configured to transfer the network message with the input process data to a message distribution module (5) of the external data infrastructure (4) for distribution to a receiver of the network message.

4. Connecting unit (100) according to Claim 3,
wherein the message distribution module (5) acts as message-oriented middleware and the transmission module (124) acts as a publisher.

5. Connecting unit (100) according to any one of the preceding claims,
wherein the reception module (124) is configured to retrieve the network message with the output process data from a message distribution module (5) of the external data infrastructure (4).

6. Connecting unit (100) according to Claim 5,
wherein the message distribution module (5) acts as message-oriented middleware and the reception module (124) acts as a subscriber.

7. Connecting unit (100) according to any one of the preceding claims,
wherein the interface module (120) is configured to prompt the interchange of the process data periodically and/or on the occurrence of an event stored in the connecting unit (100).

8. Connecting unit (100) according to any one of the preceding claims,
wherein the field bus module (110) is configured to interchange the process data via the field bus (102) periodically with the signal unit (40, 41, 42, 43, 50) .

9. Connecting unit (100) according to any one of the preceding claims,
wherein the field bus module (110) comprises a configuration module (114) configured to prompt polling of the signal unit (40, 41, 42, 43, 50) connected to the field bus (102) and to make configuration data relating to the signal unit (40, 41, 42, 43, 50) available.

10. Connecting unit (100) according to any one of the preceding claims having a server module (140),
wherein the server module (140) is connected to the network module (130) and is configured to make configuration data of the connecting unit (100) available to an access module (9) of an external computer (8) connected to the network module (130) via the external data network (7), and
wherein the connecting unit (100) is configured to configure the field bus module (110) and/or the field bus (102) and/or the signal unit (40, 41, 42, 43, 50) and/or the interface module (120) on the basis of the configuration data.

11. Connecting unit (100) according to any one of the preceding claims having a conversion module (122),
wherein the field bus module (110) is configured to interchange the process data in a field bus data format via the field bus (102),
wherein the network module (130) is configured to transmit the process data in a network data format via the external data network (7), and
wherein the conversion module (122) is configured to convert the process data between the field bus data format and the network data format.

12. Connecting unit (100) according to any one of the preceding claims having a memory module (150) configured to buffer-store the process data after reception via the field bus (102) and before sending via the external data network (7).

13. Monitoring system (30, 31) for arrangement on a field level (20) of an automation system (1, 2, 3) having a connecting unit (100) according to any one of the preceding claims for transmitting process data of an automation process of the automation system (1, 2, 3) to an external data infrastructure (4) and having a signal unit (40, 41, 42, 43, 50),
wherein the signal unit (40, 41, 42, 43, 50) is configured to be connected to the automation process via a field connection (25),
wherein a field bus interface (45) of the signal unit (40, 41, 42, 43, 50) is configured to be connected via a field bus (102) to the connecting unit (100) for the purpose of the interchange of the process data.

14. Monitoring system (30, 31) according to Claim 13,
wherein the field connection (25) of the signal unit (40, 41, 42, 43, 50) is configured as a further field bus interface (52) and
wherein the further field bus interface (52) is configured to be connected to an installation field bus (14) of the automation system (1, 2, 3), in order to concurrently log installation field bus data interchanged on the installation field bus (14) as process data.

15. Method for operating an automation system (1, 2, 3) having a connecting unit (100) for transmitting process data of the automation system (1, 2, 3) between a signal unit (40, 41, 42, 43, 50), which is connected via a field connection (25) to an automation process of the automation system (1, 2, 3), and an external data infrastructure (4),
wherein the method comprises interchanging the process data between the connecting unit (100) and the signal unit (40, 41, 42, 43, 50) via a field bus (102),
wherein the connecting unit (100) is configured as a field device for arrangement on a field level (20) of the automation system (1, 2, 3) and comprises a field bus module (110), a network module (130) and an interface module (120),
wherein the field bus module (110) is configured to interchange the process data via the field bus (102) with the signal unit (40, 41, 42, 43, 50),
wherein the network module (130) is connectable to an external data network (7) and is configured to interchange the process data via the external data network (7) with the external data infrastructure (4) and in so doing to use the data network (7) to transmit input process data to the external data infrastructure (4) and to retrieve output process data from the external data infrastructure (4),
wherein the interface module (120) is connected to the network module (130) and to the field bus module (110) for an interchange of the process data between the field bus module (110) and the network module (130),
**characterized**
**in that** the method comprises autonomously prompting an interchange of the process data between the connecting unit (100) and the external data infrastructure (4) via an external data network (7) by the interface module (120) of the connecting unit (100),
and
**in that** the interchange of the process data is prompted by means of provision and by means of retrieval of a network message comprising the process data by the connecting unit (100),
wherein the interface module (120) comprises a transmission module (124), wherein the transmission module (124) is configured to prompt the transmission of the input process data by opening a transmission channel (134) via the network module (130), in order to prompt sending of a network message comprising the input process data,
wherein the interface module (120) comprises a reception module (125), wherein the reception module (125) is configured to prompt retrieval of the output process data by opening a reception channel (135) via the network module (130), in order to prompt reception of a network message comprising the output process data,
wherein the connecting unit (100) has a realtime system (104) for executing time-critical modules of the connecting unit (100) and an application system (106) for executing non-time-critical modules of the connecting unit (100), and
wherein the realtime system (104) comprises the interface module (120) and the field bus module (110) and the application system (106) comprises the network module (130).

16. Method according to Claim 15, wherein the method comprises the further steps of:
- creating the input process data, representing a state of the automation process executed by the automation system (1, 2, 3), in the signal unit (40, 41, 42, 43, 50),
- transmitting the input process data as process data from the signal unit (40, 41, 42, 43, 50) to the connecting unit (100) as part of the interchange of the process data via the field bus (102), and
- transmitting the process data from the connecting unit (100) to the external data infrastructure (4) as part of the interchange of the process data via the external data network (7).

17. Method according to Claim 16, wherein the method comprises the further steps of:
- the signal unit (40, 41, 42, 43, 50) concurrently logging installation field bus data circulating on an installation field bus (14) connected to the signal unit (40, 41, 42, 43, 50), and
- providing the concurrently logged installation field bus data as the input process data representing a state of the automation process in the signal unit (40, 41, 42, 43, 50).

18. Method according to any one of Claims 15 to 17, comprising the further steps of:
- the external data infrastructure (4) providing the output process data as process data, and
- the connecting unit (100) retrieving the output process data from the external data infrastructure (4) as part of the interchange of the process data via the external data network (7).

19. Method according to Claim 18, wherein the method comprises the further steps of:
- transmitting the output process data from the connecting unit (100) to the signal unit (40, 41, 42, 43, 50) as part of the interchange of the process data via the field bus (102), and
- the signal unit (40, 41, 42, 43, 50) influencing the automation process on the basis of the output process data.

20. Method according to either of Claims 18 and 19, comprising the further step of:
- adapting the configuration of the connecting unit (100) on the basis of the output process data retrieved by the connecting unit (100).

21. Method according to any one of Claims 15 to 20, comprising the further steps of:
- the external data infrastructure (4) providing output process data as process data,
- a control unit (12) of the automation system (1, 2, 3) retrieving the output process data from the external data infrastructure (4),
- the control unit (12) influencing the automation process on the basis of the output process data.

## Revendications

1. Unité de liaison (100) destinée à transmettre des données de processus d'un processus d'automatisation d'un système d'automatisation (1, 2, 3) à une infrastructure de données externe (4),
l'unité de liaison (100) étant conçue comme un appareil de terrain destiné à être disposé dans un niveau de terrain (20) du système d'automatisation (1, 2, 3) et comprenant un module de bus de terrain (110), un module de réseau (130) et un module d'interface (120),
le module de bus de terrain (110) pouvant être raccordé à un bus de terrain (102) et étant conçu pour échanger les données de processus, par le biais du bus de terrain (102), avec une unité de signal (40, 41, 42, 43, 50) qui communique avec le processus d'automatisation par le biais d'un raccordement de terrain (25),
le module de réseau (130) pouvant être raccordé à un réseau de données externe (7) et étant conçu pour échanger les données de processus avec l'infrastructure de données externe (4) par le biais du réseau de données externe (7) et transmettre ainsi les données de processus d'entrée à l'infrastructure de données externe (4) et récupérer des données de processus de sortie auprès de l'infrastructure de données externe (4),
le module d'interface (120) étant raccordé au module de réseau (130) et au module de bus de terrain (110) en vue d'un échange de données de processus entre le module de bus de terrain (110) et le module de réseau (130), **caractérisée en ce que**
le module d'interface (120) est conçu pour ordonner de manière autonome l'échange de données de processus entre le module de réseau (130) et l'infrastructure de données externe (4),
le module d'interface (120) comprenant un module d'émission (124), le module d'émission (124) étant conçu pour ordonner la transmission des données de processus d'entrée en ouvrant un canal d'émission (134) par le biais du module de réseau (130) afin d'ordonner la transmission d'un message de réseau comprenant les données de processus d'entrée,
le module d'interface (120) comprenant un module de réception (125), le module de réception (125) étant conçu pour ordonner la récupération des données de processus de sortie en ouvrant un canal de réception (135) par le biais du module de réseau (130) afin d'ordonner la réception d'un message de réseau comprenant les données de processus de sortie,
l'unité de liaison (100) comportant un système en temps réel (104) destiné à exécuter des modules temporellement critiques de l'unité de liaison (100) et un système d'application (106) destiné à exécuter des modules temporellement non critiques de l'unité de liaison (100), et
le système en temps réel (104) comprenant le module d'interface (120) et le module de bus de terrain (110) et le système d'application (106) comprenant le module de réseau (130).

2. Unité de liaison (100) selon la revendication 1,
les données de processus d'entrée représentant un état ou un paramètre physique du processus d'automatisation et les données de processus de sortie représentant un état ou un paramètre physique du processus d'automatisation.

3. Unité de liaison (100) selon la revendication 2,
le module d'émission (124) étant conçu pour transmettre le message de réseau avec les données de processus d'entrée à un module de distribution de messages (5) de l'infrastructure de données externe (4) en vue de la distribution à un destinataire du message de réseau.

4. Unité de liaison (100) selon la revendication 3,
le module de distribution de messages (5) fonctionnant comme un intergiciel orienté message et le module d'émission (124) fonctionnant comme un éditeur.

5. Unité de liaison (100) selon l'une des revendications précédentes,
le module de réception (124) étant conçu pour récupérer le message de réseau avec les données de processus de sortie d'un module de distribution de messages (5) de l'infrastructure de données externe (4).

6. Unité de liaison (100) selon la revendication 5,
le module de distribution de messages (5) fonctionnant comme un intergiciel orienté message et le module de réception (124) fonctionnant comme un abonné.

7. Unité de liaison (100) selon l'une des revendications précédentes,
le module d'interface (120) étant conçu pour ordonner l'échange des données de processus de manière périodique et/ou à l'arrivée d'un événement stocké dans l'unité de liaison (100).

8. Unité de liaison (100) selon l'une des revendications précédentes,
le module de bus de terrain (110) étant conçu pour échanger périodiquement les données de processus, par le biais du bus de terrain (102), avec l'unité de signal (40, 41, 42, 43, 50).

9. Unité de liaison (100) selon l'une des revendications précédentes,
le module de bus de terrain (110) comprenant un module de configuration (114) qui est conçu pour ordonner une requête auprès de l'unité de signal (40, 41, 42, 43, 50) raccordée au bus de terrain (102) et fournir des données de configuration concernant l'unité de signal (40, 41, 42, 43, 50).

10. Unité de liaison (100) selon l'une des revendications précédentes comprenant un module serveur (140),
le module serveur (140) étant raccordé au module de réseau (130) et étant conçu pour fournir des données de configuration de l'unité de liaison (100) à un module d'accès (9) d'un ordinateur externe (8) relié au module de réseau (130) par le biais du réseau de données externe (7), et
l'unité de liaison (100) étant conçue pour configurer le module de bus de terrain (110) et/ou le bus de terrain (102) et/ou l'unité de signal (40, 41, 42, 43, 50) et/ou le module d'interface (120) sur la base des données de configuration.

11. Unité de liaison (100) selon l'une des revendications précédentes comprenant un module de conversion (122),
le module de bus de terrain (110) étant conçu pour échanger les données de processus dans un format de données de bus de terrain par le biais du bus de terrain (102),
le module de réseau (130) étant conçu pour transmettre les données de processus dans un format de données de réseau par le biais du réseau de données externe (7), et le module de conversion (122) étant conçu pour convertir les données de processus entre le format de données de bus de terrain et le format de données de réseau.

12. Unité de liaison (100) selon l'une des revendications précédentes comprenant un module de mémoire (150) qui est conçu pour mémoriser temporairement les données de processus après réception par le biais du bus de terrain (102) et avant émission par le biais du réseau de données externe (7).

13. Système de surveillance (30, 31) destiné à être disposé dans un niveau de terrain (20) d'un système d'automatisation (1, 2, 3) et comprenant une unité de liaison (100) selon l'une des revendications précédentes destinée à transmettre des données de processus d'un processus d'automatisation du système d'automatisation (1, 2, 3) à une infrastructure de données externe (4) et à une unité de signal (40, 41, 42, 43, 50),
l'unité de signal (40, 41, 42, 43, 50) étant conçue pour être reliée au processus d'automatisation par le biais d'une liaison de terrain (25),
une unité d'interface de bus de terrain (45) de l'unité de signal (40, 41, 42, 43, 50) étant conçue pour être reliée à l'unité de liaison (100) par le biais d'un bus de terrain (102) dans le but d'échanger les données de processus.

14. Système de surveillance (30, 31) selon la revendication 14,
le raccordement de terrain (25) de l'unité de signal (40, 41, 42, 43, 50) étant conçu comme une autre interface de bus de terrain (52) et
l'autre interface de bus de terrain (52) étant conçue pour être raccordée à un bus de terrain d'installation (14) du système d'automatisation (1, 2, 3) afin de consigner également des données de bus de terrain d'installation, échangées sur le bus de terrain d'installation (14), en tant que données de processus.

15. Procédé de fonctionnement d'un système d'automatisation (1, 2, 3) comprenant une unité de liaison (100) destinée à la transmission de données de processus du système d'automatisation (1, 2, 3) entre une unité de signal (40, 41, 42, 43, 50), qui est reliée par le biais d'un raccordement de terrain (25) à un processus d'automatisation du système d'automatisation (1, 2, 3), et à une infrastructure de données externe (4),
le procédé comprenant l'échange des données de processus entre l'unité de liaison (100) et l'unité de signal (40, 41, 42, 43, 50) par le biais d'un bus de terrain (102), l'unité de liaison (100) étant conçue comme un appareil de terrain destiné à être disposé dans un niveau de terrain (20) du système d'automatisation (1, 2, 3) et comprenant un module de bus de terrain (110), un module de réseau (130) et un module d'interface (120),
le module de bus de terrain (110) étant conçu pour échanger les données de processus, par le biais du bus de terrain (102), avec l'unité de signal (40, 41, 42, 43, 50),
le module de réseau (130) pouvant être raccordé à un réseau de données externe (7) et étant conçu pour échanger les données de processus avec l'infrastructure de données externe (4) par le biais du réseau de données externe (7) et transmettre ainsi les données de processus d'entrée à l'infrastructure de données externe (4) par le biais du réseau de données externe (7) et récupérer des données de processus de sortie auprès de l'infrastructure de données externe (4),
le module d'interface (120) étant relié au module de réseau (130) et au module de bus de terrain (110) en vue d'un échange de données de processus entre le module de bus de terrain (110) et le module de réseau (130),
**caractérisé en ce que**
le procédé comprend l'étape visant à ordonner de manière autonome un échange de données de processus entre l'unité de liaison (100) et l'infrastructure de données externe (4) par le biais d'un réseau de données externe (7) par l'intermédiaire du module d'interface (120) de l'unité de liaison (100), et
l'échange des données de processus est ordonné par l'intermédiaire de l'unité de liaison (100) par fourniture et récupération d'un message de réseau, comprenant les données de processus, le module d'interface (120) comprenant un module d'émission (124), le module d'émission (124) étant conçu pour ordonner la transmission des données de processus d'entrée en ouvrant un canal d'émission (134) par le biais du module de réseau (130) afin d'ordonner l'émission d'un message de réseau comprenant les données de processus d'entrée,
le module d'interface (120) comprenant un module de réception (125), le module de réception (125) étant conçu pour ordonner la récupération des données de processus de sortie en ouvrant un canal de réception (135) par le biais du module de réseau (130) afin d'ordonner la réception d'un message de réseau comprenant les données de processus de sortie,
l'unité de liaison (100) comportant un système en temps réel (104) destiné à exécuter des modules temporellement critiques de l'unité de liaison (100) et un système d'application (106) destiné à exécuter des modules temporellement non critiques de l'unité de liaison (100), et
le système en temps réel (104) comprenant le module d'interface (120) et le module de bus de terrain (110) et le système d'application (106) comprenant le module de réseau (130).

16. Procédé selon la revendication 15,
le procédé comprenant les étapes supplémentaires suivantes :
- créer les données de processus d'entrée, qui représentent un état du processus d'automatisation exécuté par le système d'automatisation (1, 2, 3), dans l'unité de signal (40, 41, 42, 43, 50),
- transmettre les données de processus d'entrée en tant que données de processus de l'unité de signal (40, 41, 42, 43, 50) à l'unité de liaison (100) dans le cadre de l'échange des données de processus par le biais du bus de terrain (102) et
- transmettre les données de processus de l'unité de liaison (100) à l'infrastructure de données externe (4) dans le cadre de l'échange des données de processus par le biais du réseau de données externe (7).

17. Procédé selon la revendication 16, le procédé comprenant les étapes supplémentaires suivantes :
- consigner des données de bus de terrain d'installation, qui circulent sur un bus de terrain d'installation (14) raccordé à l'unité de signal (40, 41, 42, 43, 50), par l'intermédiaire de l'unité de signal (40, 41, 42, 43, 50) et
- fournir les données de bus de terrain d'installation consignées en tant que données de processus d'entrée, qui représentent un état du processus d'automatisation, dans l'unité de signal (40, 41, 42, 43, 50).

18. Procédé selon l'une des revendications 15 à 17 comprenant les étapes supplémentaires suivantes :
- fournir les données de processus de sortie en tant que données de processus par l'intermédiaire de l'infrastructure de données externe (4) et
- récupérer les données de processus de sortie auprès de l'infrastructure de données externe (4) par l'intermédiaire de l'unité de liaison (100) dans le cadre de l'échange de données de processus par le biais du réseau de données externe (7).

19. Procédé selon la revendication 18, le procédé comprenant les étapes supplémentaires suivantes :
- transmettre les données de processus de sortie de l'unité de liaison (100) à l'unité de signal (40, 41, 42, 43, 50) dans le cadre de l'échange des données de processus par le biais du bus de terrain (102) et
- influer sur le processus d'automatisation par l'intermédiaire de l'unité de signal (40, 41, 42, 43, 50) sur la base des données de processus de sortie.

20. Procédé selon l'une des revendications 18 et 19 comprenant l'étape supplémentaire suivante :
- adapter la configuration de l'unité de liaison (100) sur la base des données de processus de sortie récupérées par l'unité de liaison (100).

21. Procédé selon l'une des revendications 15 à 20 comprenant les étapes supplémentaires suivantes :
- fournir des données de processus de sortie en tant que données de processus par l'intermédiaire de l'infrastructure de données externe (4),
- récupérer des données de processus de sortie auprès de l'infrastructure de données externe (4) par l'intermédiaire d'une unité de commande (12) du système d'automatisation (1, 2, 3),
- influer sur le processus d'automatisation sur la base des données de processus de sortie par l'intermédiaire de l'unité de commande (12).
